# EUROPEAN PATENT APPLICATION

(11) **EP 3 978 575 A1**
(43) Date of publication of application: **06.04.2022**
(21) Application number: 20814382.6
(22) Date of filing: 25.05.2020
(51) Int. Cl.: C09D 5/16, C09D 183/04, C09D 7/63

(54) **ANTIFOULING COATING COMPOSITION**

(30) Priority: 29.05.2019 JP 2019100048
(71) Applicant: Nitto Kasei Co., Ltd., Osaka-shi Osaka 533-0031 (JP)
(72) Inventor: WAKU, Hidenori, Osaka-shi, Osaka 533-0031 (JP)
(74) Representative: Gulde & Partner
(86) International application number: PCT/JP2020/020458
(87) International publication number: WO 2020/241542

(57) **Abstract**

An antifouling coating composition including an organopolysiloxane (A) having a cross-linkable functional group; a curing catalyst (B); and a bleeding oil (C); wherein: the curing catalyst (B) contains at least one of components (B1) to (B3); the component (B1) is a salt of a nitrogen containing compound (B1a) and an organic acid (B1b); the component (B2) is a ketimine group containing compound; and the component (B3) is a combination of a tertiary amino group containing compound (B3a) and a β-diketone (B3b), is provided.

## Description

### TECHNICAL FIELD

The present invention relates to an antifouling coating composition for preventing aquatic fouling organisms from adhering and growing on an object which is used or exists in underwater.

### BACKGROUND

In the underwater of oceans, rivers, lakes and the like, a large number of aquatic fouling organisms such as barnacles, sea squirts, tubeworms, common mussels, fresh-water mussel, *Bugula neritina,* green laver, sea lettuce and the like exist.

Conventionally, there has been a problem that aquatic fouling organisms adhere onto object which is used or exists in underwater, such as ships; fishing tools such as fishing nets (aquaculture nets, fixed nets and the like), fishing net accessories; jetties, tetrapods, port facilities, buoys, pipelines, bridges, water pipes of power plants, submarine bases, submarine oil drilling facilities, and other underwater structures. In particular, when ships and the like are immersed underwater for a long period of time, the afore-mentioned aquatic fouling organisms adhere and grow at the contacting portions with water. This would trigger decrease in ship speed, decrease in water flow rate and the like, resulting in significant economic and resource losses. Accordingly, in order to prevent the adhesion of aquatic fouling organisms, the application of antifouling coating has been considered.

For example, antifouling coating containing antifouling compound such as trialkyl tin compounds are conventionally used as the above antifouling coating.

However, although the above antifouling coating have very good antifouling properties, they are highly toxic and there are concerns about their safety and environmental impact.

Therefore, as a non-toxic antifouling coating, silicone rubber based antifouling coating that forms a coating film of silicone rubber alone or a mixture of silicone rubber and silicone oil have been proposed (Patent Literatures 1 to 4).

However, these antifouling coating use dialkyl tin compounds as curing catalyst, and although the amount used is very small, it is desirable not to use them in terms of environmental protection.

### CITATION LIST

### PATENT LITERATURE

[Patent Literature 1] JP-A-S51-96830
[Patent Literature 2] JP-A-S56-26272
[Patent Literature 3] JP-A-S63-43973
[Patent Literature 4] JP-A-H3-255169

### SUMMARY OF INVENTION

### TECHNICAL PROBLEM

The present invention aims to provide an antifouling coating composition that can form a coating film with excellent curability, adhesiveness and antifouling properties in underwater, and is environmentally safe.

### SOLUTION TO PROBLEM

According to the present invention, an antifouling coating composition comprising: an organopolysiloxane (A) having a cross-linkable functional group; a curing catalyst (B); and a bleeding oil (C); wherein: the curing catalyst (B) contains at least one of components (B1) to (B3); the component (B1) is a salt of a nitrogen containing compound (B1a) and an organic acid (B1b); the component (B2) is a ketimine group containing compound; and the component (B3) is a combination of a tertiary amino group containing compound (B3a) and a β-diketone (B3b), is provided.

The present inventors have conducted intensive studies to solve the afore-mentioned problems, and have found that usage of a particular non-toxic catalyst as the catalyst for condensation reaction of organopolysiloxane can solve the afore-mentioned problem, thereby leading to completion of the present invention.

### MODE FOR CARRYING OUT THE INVENTION

Hereinafter, the present invention will be described in detail.

### 1. Antifouling Coating Composition

The antifouling coating composition according to the present invention comprises organopolysiloxane (A) having a cross-linkable functional group, curing catalyst (B), and bleeding oil (C).

### 1-1. Organopolysiloxane (A)

Organopolysiloxane (A) is organopolysiloxane having a cross-linkable functional group. The cross-linkable functional group preferably exists on the silicon atom of the molecular chain. Further, it is preferable to have an organic group other than the cross-linkable functional group.

As the cross-linkable functional group, for example, alkoxy group such as hydroxyl group, methoxy group, ethoxy group, propoxy group and the like; aralkyloxy group such as benzyloxy group and the like can be mentioned.

As the organic group, in general, an organic group possessed by organopolysiloxane can be mentioned. In particular, alkyl group such as methyl group, ethyl group, and propyl group; cycloalkyl group such as cyclopentyl group and cyclohexyl group; alkenyl group such as vinyl group and allyl group; aralkyl group such as benzyl group; aryl group such as phenyl group and naphthyl group; halogenated alkyl group such as 3,3,3-trifluoropropyl group and the like can be mentioned.

The organopolysiloxane (A) forms organopolysiloxane rubber in the presence of curing catalyst (B) explained later and moisture (can be moisture in air), by undergoing condensation reaction. In particular, the cross-linkable functional group in the afore-mentioned organopolysiloxane (A) undergoes condensation reaction with a cross-linkable functional group in other organopolysiloxane (A) or with a hydrolyzable group in a crosslinker, thereby forming a silicone rubber, resulting in a coating. The reaction temperature of the condensation reaction is usually 80 °C or lower, preferably 50 °C or lower.

As the organopolysiloxane (A), the ones used as the coating forming component in conventional silicone rubber based antifouling coating can be used. In particular, the organopolysiloxane (A) can be categorized into dealkoxy, deacetone type, dealcohol type, deoxime type, deacetic acid type and the like, depending on the reaction type. In the present invention, as the organopolysiloxane (A), the same type can be used, or two or more different types can be used in combination.

The weight average molecular weight of the organopolysiloxane (A) is preferably 400 to 1,000,000, more preferably 2,000 to 150,000, and further preferably 4,000 to 80,000. The organopolysiloxane (A) can be used as a combination of two or more types having different weight average molecular weight. The weight average molecular weight is, particularly for example, 400, 1000, 2000, 4000, 10000, 20000, 30000, 40000, 50000, 60000, 70000, 80000, 100,000, 150,000, 500,000, or 1,000,000, and can be in the range between the two values exemplified herein.

As a commercially available organopolysiloxane (A), KE-40RTV, KE-41, KE-42, KE-42RTV, KE-42S, KE-44, KE-44RTV, KE-45, KE-45TS, KE-45TSRTV, KE-441, KE-445, KE-45TS, KE-47, KE-48, KE-66, KE-348, KE-3479, KE-347, KE-118, KE-347, KE-402, KE-420, KR-2706, KE-4348, KE-66RTV, KE-1251, KE-1253, KE-3490, KE-3491, KE-4525, KE-4866, FE123, KE-4895, KE-4896, KE-4897, KE-4898, RF-5000 and RF-10000 (all available from Shin-Etsu Chemical Co., Ltd.); XIAMETER OHX-4010 Polymer, XIAMETER OHX-4012 Polymer (all available from DuPont Toray Specialty Materials K.K.); XC96-723, YF3800, XF3905, YF3057, YF3807, YF3802, YF3897, YR3204 (all available from Momentive Performance Material, Inc.); BLUESIL FLD 48V3500 (all available from Elkem AS); POLYMER FD 6 (available from Wacker Chemie AG); DMS-S21, DMS-S27, DMS-S31, DMS-S32, DMS-S33, DMS-S35, DMS-S42, DMS-S45, DMS-S51, PDS-0332, PDS-9931, FMS-9922 (all available from Gelest, Inc.) and the like can be mentioned.

### 1-2. Curing Catalyst (B)

The curing catalyst (B) is a curing catalyst containing a nitrogen atom, and comprises at least one of component (B1) to (B3). By allowing to include the curing catalyst (B), organopolysiloxane rubber can be suitably formed from the organopolysiloxane (A), and thus a coating film which has superior antifouling properties by being capable to exhibit antifouling effect for a long period of time can be formed. Further, the composition of the present invention does not use dialkyl tin compounds as the curing catalyst, and is thus environmentally safe. The composition of the present invention can be used also as a one pack type antifouling coating, and is thus superior in workability.

The content of the curing catalyst (B) in the composition of the present invention is not particularly limited. However, the content is, with respect to 100 parts by mass of organopolysiloxane (A), preferably 0.01 to 50 parts by mass, more preferably 0.02 to 20 parts by mass. This content is, particularly for example, 0.01, 0.1, 0.2, 0.3, 0.4, 0.5, 0.6, 0.7, 0.8, 0.9, 1, 2, 3, 4, 5, 6, 7, 8, 9, 10, 11, 12, 13, 14, 15, 16, 17, 18, 19, 20, 25, 30, 35, 40, 45, or 50, and can be in the range between the two values exemplified herein.

### 1-2-1. Component (B1)

Component (B1) is a salt of nitrogen containing compound (B1a) and organic acid (B1b). The mass ratio of organic acid (B1b) with respect to nitrogen containing compound (B1a) is preferably 0.01 to 100, more preferably 0.05 to 20, and further preferably 0.1 to 10. This mass ratio is, particularly for example, 0.01, 0.05, 0.1, 0.2, 0.3, 0.4, 0.5, 0.6, 0.7, 0.8, 0.9, 1, 2, 3, 4, 5, 6, 7, 8, 9, 10, 20, 50, or 100, and can be in the range between the two values exemplified herein.

### (1) Nitrogen Containing Compound (B1a)

The nitrogen containing compound (B1a) is a compound containing nitrogen atom, and amine compound, amino silane and the like can be mentioned. In particular, the following compounds can be exemplified. The nitrogen containing compound (B1a) can be composed of one type of compound or two or more types of compounds.

### (Monoamine)

ethanamine, propan-1-amine, N,N-dimethylpropargylamine, isopropylamine, isobutylamine, tert-butylamine, 2-methylallylamine, pentan-1-amine, 3-pentylamine, 2,2-dimethylpropylamine (C5), 2-methylbutylamine, isoamylamine, hexan-1-amine, heptan-1-amine, 2-heptylamine, 4-heptylamine, decan-1-amine, 2-ethylhexylamine, n-octan-1-amine, tert-octylamine, nonan-1-amine, undecan-1-amine, tridecan-1-amine, dodecan-1-amine, tetradecan-1-amine, pentadecan-1-amine, heptadecan-1-amine, hexadecan-1-amine, octadecan-1-amine, nonadecan-1-amine, 2-heptylamine, 2-butyl-1-n-octylamine, 1-methylheptylamine, 1-hexylheptylamine, 1-pentylhexylamine, N-methyl-n-octylamine,
N-ethylmethlamine, diethylamine, N-ethylisopropylamine, N-tert-butylethylamine, N-methylpropylamine, N-methylisobutylamine, dipropylamine, diisobutylamine,
N,N-dimethylethylamine, N-butyldimethylamine, N-ethyldiisopropylamine, N,N-dimethyl-n-octylamine, tri-n-octylamine, N,N-dimethyl-2-ethylhexan-1-amine, N,N-dimethyldecylamine, N,N-dimethyldodecylamine, N,N-dimethylhexadecylamine, N,N-dimethyltetradecylamine, N,N-dimethylbenzylamine, N,N-dimethyl-2-naphtylamine,
cyclohexylamine, cycloheptylamine, cyclooctaamine, hexahydro-m-xylylenediamine, isophoronediamine, 2-methylcyclohexylamine, N-methylcyclohexylamine, 4,4'-methylenebis(cyclohexylamine),
tetramethyleneimine, pentamethyleneimine, 3,5-dimethylpiperidine, 2-ethylpiperidine, 4-isopropylpiperidine, methylpiperidine, 1-methylpiperidine, 1,3-dimethylpiperidine, 1-ethylpiperidine, 4-hydroxy-1-methylpiperidine,
3-aminopropyl silica gel, DL-isopropanolamine

### (Diamine)

ethylenediamine, N-methylethylenediamine, N,N,N'-triethylethylenediamine, N,N,N',N'-tetramethylethylenediamine, N,N,2,2-tetramethyl-1,3-propanediamine, N,N,N',N'-tetraethylenediamine, 1,3-propanediamine, N,N-dimethylethylenediamine, N,N-diethylethylenediamine, N,N-diethyl-N'-methylethlenediamine, diethylaminopropylamine, 1,4-butanediamine, 2-methyl-1,5-pentanediamine, 1,6-hexanediamine, 1,7-heptanediamine, 1,8-octanediamine, 1,10-decanediamine, 1,11-undecanediamine, 1,12-dodecanediamine, bis(6-aminohexyl)amine, N,N'-dimethyl-1,6-hexanediamine, N,N,N',N'-tetramethylhexane-1,6-diamine, diproprenediamine, menthenediamine, isophoronediamine, 4,4'-diaminodicyclohexylmethane, xylenediamine, xylylenediamine, phenylenediamine, N,N-dimethylpiperazine, 4-amino-1-methylpiperidine,

### (Triamine or Higher)

diethylenetriamine, N,N,N',N"-pentamethyldiethylenetriamine, triethylenetetramine, tetraethylenepentamine, heptamethyleneimine, N,N,N',N",N‴,N‴-hexamethyltriethylenetetramine, tris[2-(dimethylamino)ethyl]amine, N,N-bis(2-aminoethyl)methylamine, tris(2-aminoethyl)amine,

### (Heterocyclic Amine)

pyridine, N-methylpyridine, N-benzyl-3-aminopyridine, N-methyl-3-pyrrolidinol, N-benzyl-3-pyrrolidone, pyrrole, imidazole, 2-methylpyrimidine, N-methylpiperazine, 1,4-dimethylpiperazine, N-ethylpiperazine, N-allylpiperazine, N-isobutylpiperazine, 1,4-bis(aminopropyl)piperazine, 1-(t-butoxycarbonyl)piperazine, 1-cyclopentylpiperazine, 1-amino-4-cyclopentylpiperazine, 1-(2-pyrimidyl)piperazine, 2-methylpiperazine, cis-2,6-dimethylpiperazine, homopiperazine, N-methylhomopiperazine, N-acetylhomopiperazine, N-butylhomopiperazine, N-aminoethylpiperazine, 3-phenyl-1,1-dimethylurea,
benzyl dimethylamine, 2-(dimethylaminomethyl)phenol, 2,4,6-tris(dimethylaminomethyl)phenol, 1-azabicyclo[2.2.2]octane, 1,4-diazabicyclo[2.2.2]octane, 2-hydroxymethyltriethylenediamine,
1,8-diazabicyclo[5.4.0]-7-undecene, 1,5-diazabicyclo[4.3.0]-5-nonene, 2-methylimidazole, 2-ethyl-4-methylimidazole, 1-cyanoethyl-2-ethyl-4-methylimidazole, 4-[1-(2,3-dimethylphenyl)ethyl]-1H-imidazole, 1-(2-cyanoethyl)-2-undecylimidazole, epoxy-imidazole adduct,
As a commercially available amine compound, FARMIN 08D, FARMIN DM0898, FARMIN DM1098, FARMIN DM2098, FARMIN DM4098 FARMIN DM 6098 (all available from Kao Corporation); D1040, B3150, D1040 (all available from KOEI CHEMICAL COMPANY, LIMITED); Wandamin HM (available from New Japan Chemical Co., Ltd.); CUREDUCT, CUREZOL (all available from SHIKOKU CHEMICALS CORPORATION); 2-hydroxymethyltriethylenediamine (product name : RZETA, available from Tosoh Corporation) can be mentioned.

### (Polyamine Compound)

lauryl aminopropylamine, compound represented by formula H₂N(C₂H₄NH)ₙH (n≥5) (product name: Poly-8, available from Tosoh Corporation), polyoxypropylene with a primary amino group at the terminal of the molecule (product name: JEFFAMINE SEREIS, available from Suntechno Japan), polyethyleneimine (product name: EPOMIN Series, available from NIPPON SHOKUBAI CO., LTD.), aminoethylated acrylic polymer (product name: POLYMENT Series, available from NIPPON SHOKUBAI CO., LTD.) and the like can be mentioned.

### (Amino Silane)

N-2-(aminoethyl)-3-aminopropylmethyldimethoxysilane, N-2-(aminoethyl)-3-aminopropyltrimethoxysilane, 3-(2-aminoethylamino)propyltriethoxysilane, N-2-(aminoethyl)-3-aminopropylmethyldimethoxysilane, 3-aminopropylmethyldimethoxysilane, 3-aminopropyltrimethoxysilane, 3-aminopropylmethyldiethoxysilane, 3-aminopropyltriethoxysilane, N-cyclohexyl-3-aminopropylmethyldimethoxysilane, N-cyclohexyl-3-aminopropyltrimethoxysilane, N-cyclohexyl-3-aminopropyltriethoxysilane, N-phenyl-3-aminopropylmethyldimethoxysilane, N-phenyl-3-aminopropyltrimethoxysilane, 3-ureidopropylmethyldimethoxysilane, 3-ureidopropyltrimethoxysilane, 3-ureidopropyltriethoxysilane, 3-(butylamino)propyltrimethoxysilane, diethylaminomethyltriethoxysilane, bis(3-trimethoxysilylpropyl)amine, bis(3-triethoxysilylpropyl)amine, N-(n-butyl)-3-aminopropyltrimethoxysilane, diaminosilane-containing silane oligomer (product name "Dynasylan 1146" available from Evonik Industries AG), aminosilane-containing silane oligomer (product names "Dynasylan VPS SIVO 260" and "Dynasylan VPS SIVO 280" available from Evonik Industries AG)

### (Ketimine Silane)

3-methyldimethoxysilyl-N-(1,3-dimethylbutyridene)propylamine, 3-trimethoxysilyl-N-(1,3-dimethylbutyridene)propylamine, 3-triethoxysilyl-N-(1,3-dimethylbutyridene)propylamine,

### (Guanidine Silane)

N,N,N',N'-tetramethyl-N"-[3-(methyldimethoxysilyl)propyl]guanidine, N,N,N',N'-tetramethyl-N"-[3-(trimethoxysilyl)propyl]guanidine, N,N,N',N'-tetramethyl-N"-[3-(triethoxysilyl)propyl]guanidine,
Guanidine silanes can be prepared, for example, by reacting 3-isocyanate propyltriethoxysilane with 1,3-diphenylguanidine.

### (Keto oxime silane)

(vinyl) tris[[(1-methylpropylidene)amino]oxy]silane, methyl tris[[(1-methylpropylidene)amino]oxy]silane

As a commercially available amino silane, ketimine silane, guanidine silane, and keto oxime silane, for example, SILQUEST A-1100 SILANE, SILQUEST A-1110 SILANE, SILQUEST A-1120 SILANE, SILQUEST A-2120 SILANE, SILQUEST Y-9669 SILANE (all available from Momentive Performance Material, Inc.); Sila-Ace S310, Sila-Ace S320, Sila-Ace S330, Sila-Ace S340 (all available from JNC CORPORATION); GENIOSIL GF9, GENIOSIL GF91, GENIOSIL GF92, GENIOSIL XL926, GENIOSIL GF93, GENIOSIL GF94, GENIOSIL GF95, GENIOSIL GF96, GENIOSIL GF98 (all available from Wacker Chemie AG); KBM-602, KBM-603, KBM-903, KBE-903, KBE-9103, KBE-573 (all available from Shin-Etsu Chemical Co., Ltd.); Dynasylan AMMO, Dynasylan AMEO, Dynasylan 1505, Dynasylan 1189, Dynasylan DAMO, Dynasylan DAMO-T, Dynasylan 1122, Dynasylan 1124, Dynasylan 1189, Dynasylan 1146, Dynasylan 1411, Dynasylan VPS SIVO 260, Dynasylan VPS SIVO 280 (all available from Evonik Industries AG); SiSiB PC9963 (available from Power Chemical Corporation); SID3395.4 (available from Gelest, Inc.); VTO(VOS), MTO(MOS) (all available from Toray Industries, Inc.); A-1170, A-link15 (all available from ENEOS NUC Corporation); can be mentioned. These compounds can be used alone, or two or more of these compounds can be used in combination.

### (Amino Modified Silicone Oil)

KF-865, KF-393

### (2) Organic Acid (B1b)

Organic acid (B1b) is an acid of organic compound, and preferably contains carboxyl group or sulfo group. For example, the following compounds can be mentioned. Organic acid (B1b) can be composed of one or two or more types of compounds. As the organic acid (B1b), the ones having four or more carbon atoms within its molecule is preferable in terms of smoothness and antifouling properties of the surface of the coating film.

methanoic acid, ethanoic acid, propanoic acid, butanoic acid, pentanoic acid, hexanoic acid, heptanoic acid, octanoic acid, 2-ethylhexanoic acid, nonanoic acid, decanoic acid, undecanoic acid, dodecanoic acid, tridecanoic acid, tetradecanoic acid, pentadecanoic acid, hexadecanoic acid, heptadecanoic acid, 2-hexyldecanoic acid, octadecanoic acid, nonadecanoic acid, eicosanoic acid, heneicosanoic acid, docosanoic acid

### (With Double Bond)

myristoleic acid, palmitoleic acid, oleic acid, linoleic acid, eicosadienoic acid, docosadienoic acid, linolenic acid, pinolenic acid, eicosatetraenoic acid, eicosapentaenoic acid, docosahexaenoic acid,
pivalic acid, 3-methylbutanoic acid, methylhexanoic acid, 2,2-dimethylhexanoic acid, methylheptanoic acid, methyl-n-octanoic acid, isononanoic acid, isostearic acid, neononanoic acid, neodecanoic acid, naphthenic acid, methylcyclohexane carboxylic acid
phthalic acid, terephthalic acid, 1-carboxymethyl adamantane, abietic acid, neoabietic acid, secodehydroabietic acid, dehydroabietic acid, palustric acid, isopimaric acid, dehydroabietic acid,
5-oxohexanoic acid, 12-hydroxystearic acid,

### (Diacid)

succinic acid, 2-methylglutaric acid, adipic acid (1,4-butanedicarboxylic acid), 3-methyladipic acid, pimelic acid (1,5-heptanedicarboxylic acid), suberic acid (1,6-hexanedicarboxylic acid), azelaic acid (1,7-heptanedicarboxylic acid), sebacic acid (1,8-octanedicarboxylic acid), 1,9-nonanedicarboxylic acid, 1,10-decanedicarboxylic acid, brassilic acid, 1,12-dodecanedicarboxylic acid, 1,15-pentadecanedicarboxylic acid, 1,16-hexadecanedicarboxylic acid, 1,3-bis(carboxymethyl)adamantane, 2,4-diethylglutaric acid (2,4-diethylpentanedioic acid), polymerized rosin

### (Triacid)

### trimellitic acid

### (Anhydride)

phthalic anhydride, trimellitic anhydride, pyromellitic anhydride, maleic anhydride, succinic anhydride, benzophenone tetracarboxylic anhydride, ethylene glycol bis-anhydritrimellitate, glycerol tritrimellitate, endomethylenetetrahydrophthalic anhydride, methylcyclohexene dicarboxylic anhydride, alkylstyrene-maleic anhydride copolymer, chlorendic anhydride, polyazelaic anhydride, methyltetrahydrophthalic anhydride, methylendomethylenetetrahydrophthalic anhydride, methyltetrahydrophthalic anhydride, methylbutenyltetrahydrophthalic anhydride, dodecenylsuccinic anhydride, hexahydrophthalic anhydride, methylhexahydrophthalic anhydride, 4-methylhexahydrophthalic anhydride/hexahydrophthalic anhydride = 70/30 (mixture, RIKACID MH-700, available from New Japan Chemical Co., Ltd.)

benzenesulfonic acid, p-toluenesulfonic acid, azulenesulfonic acid, polystyrene sulfonic acid and derivatives thereof: Product name : VERSA-TL, NARLEX (available from NSC Co., Ltd.)

### 1-2-2. Component (B2)

Component (B2) is a ketimine group containing compound (a compound containing a ketimine group within its molecule). The ketimine group containing compound (B2) can be composed of one type of compound or two or more types of compounds.

The ketimine group containing compound (B2) can be obtained by allowing amine compound (B2a) react with ketone compound (B2b).

The amine compound (B2a) is a primary amine compound, and is for example, alkylene diamine such as ethylene diamine, 1,2-diaminopropane, 1,3-diaminopropane, 1,3-diaminobutane, and 1,4-diaminobutane; polyalkyl polyamine such as diethylenetriamine, triethylenetriamine, and tetraethylene pentamine; alicyclic polyamine such as 1,3-bisaminomethylcyclohexane, 1,2-diaminocyclohexane, 1,4-diamino-3,6-diethylcyclohexane, and isophoronediamine; aromatic polyamine such as m-xylylenediamine, diaminodiphenylmethane, and diaminodiphenyl sulfone; imidazole such as 2-methylimidazole, 2-ethyl-4-methylimidazole, 2-isopropylimidazole, 2-undecylimidazole, 2-heptadecylimidazole, 2-phenylimidazole, 2-phenyl-4-methylimidazole, and 2-aminopropylimidazole; dihydrazide such as adipic acid dihydrazide; polyamine containing tertiary and primary amino groups within its molecule such as N,N-dimethylaminopropylamine, N,N-diethylaminopropylamine, N,N-dipropylaminopropylamine, N,N-dibutylaminopropylamine, N,N-dimethylaminoethylamine, N,N-dimethylaminobutylamine, aminopropylmorpholine, aminoethylpiperidine, and 1-(2-aminoethyl)-4-methylpiperazine; polyoxyalkylene diamine such as polyoxyethylene diamine and polyoxypropylene diamine, and the like can be mentioned.

As the ketone compound (B2b), for example, acetone, methyl ethyl ketone, diethyl ketone, methyl propyl ketone, methyl isopropyl ketone, methyl isobutyl ketone, diisopropyl ketone, phenyl methyl ketone, methyl hexanone, methyl cyclohexanone, cyclopentanone, cycloheptanone, acetophenone, ketone resin and the like can be mentioned.

The amount of the amine compound (B2a) and the ketone compound (B2b) used are adjusted so that 2 or more moles of ketone compound is used with respect to 1 mole of amino compound.

As the catalyst used for manufacturing the ketimine group containing compound (B2), for example, tertiary amine such as trimethylamine, ethyldimethylamine, triethylamine, propyldimethylamine, tributylamine, triethylenediamine, N,N'-dimethylpiperazine, pyridine, picoline, 1,8-diazabicyclo(5,4,0)undecen-7, benzyldimethylamine, 2-(dimethylaminomethyl)phenol, 2,4,6-tris(dimethylaminomethyl)phenol; sulfonic acid such as methane sulfonic acid, benzene sulfonic acid, m-xylene sulfonic acid, p-toluene sulfonic acid, hydroxymethyl sulfonic acid, 2-hydroxyethylsulfonic acid, hydroxypropylsulfonic acid, trifluoromethanesulfonic acid, sulfosalicylic acid, sulfophthalic acid, and the like can be mentioned. From the viewpoint of the ability to achieve high ketimination rate, it is preferable to use these tertiary amine and sulfonic acid in combination or to use these as salts. In particular, it is preferable to use a salt obtained from p-toluene sulfonic acid and triethylamine.

The amount of catalyst used in these reactions is preferably 0.001 to 5 parts by mass, more preferably 0.01 to 1 parts by mass with respect to 100 parts by mass of the amine compound.

As the solvent used for the afore-mentioned reactions, for example, since ketone compounds such as acetone and methyl ethyl ketone can be used, these ketone compounds can be used in excess amount and serve as the solvent. In addition, aromatic hydrocarbons such as benzene, toluene, and xylene; dioxane, tetrahydrofuran, N-methyl-2-pyrrolidone and the like can be used. The amount of these solvent used is arbitrary. Usually, 10 to 100 parts by mass of the solvent is used with respect to 100 parts by mass of the sum of polyoxypropylene diamine and ketone compound.

As a commercially available ketimine group containing compound (B2), for example, 3-methyldimethoxysilyl-N-(1,3-dimethylbutyridene)propylamine, 3-trimethoxysilyl-N-(1,3-dimethylbutyridene)propylamine, 3-triethoxysilyl-N-(1,3-dimethylbutyridene)propylamine and the like can be mentioned. As a commercially available ones, KBE-9103P (available from Shin-Etsu Chemical Co., Ltd.); Sila-Ace S304 (available from Chisso Corporation); Z-6860 SILANE (available from DuPont Toray Specialty Materials K.K.) can be mentioned.

### 1-2-3. component (B3)

Component (B3) is a combination of tertiary amino group containing compound (B3a) and β-diketone (B3b). The mass ratio of β-diketone (B3b) with respect to compound (B3a) is preferably 0.01 to 100, more preferably 0.05 to 20, and further preferably 0.1 to 10. This mass ratio is, particularly for example, 0.01, 0.05, 0.1, 0.2, 0.3, 0.4, 0.5, 0.6, 0.7, 0.8, 0.9, 1, 2, 3, 4, 5, 6, 7, 8, 9, 10, 20, 50, or 100, and can be in the range between the two values exemplified herein.

There is no need to blend the compound (B3a) and β-diketone (B3b) beforehand, and they can be blended at the time of the preparation of the antifouling coating composition to exhibit the effect as the catalyst.

### (1) Tertiary Amino Group Containing Compound (B3a)

The compound (B3a) is a compound containing a tertiary amino group. As the compound (B3a), in particular, the followings can be mentioned for example. The compound (B3a) can be composed of one type of compound or two or more types of compounds.

### (Tertiary Monoamine)

N,N-dimethyl ethylamine, N-butyl dimethylamine, N-ethyl diisopropylamine, N,N-dimethyl-n-octylamine, N,N-dimethyl-2-ethylhexan-1-amine, tri-n-octylamine, N,N-dimethyl decylamine, N,N-dimethyl dodecylamine, N,N-dimethyl hexadecylamine, N,N-dimethyl tetradecylamine, N,N-dimethyl benzylamine, N,N-dimethyl-2-naphthylamine, 1-azabicyclo[2.2.2]octane, 3-phenyl-1,1-dimethylurea,

### (Tertiary Diamine)

1-methylpiperidine, 1,3-dimethylpiperidine, 1-ethylpiperidine, 4-hydroxy-1-methylpiperidine, benzyl dimethylamine, 2-(dimethylaminomethyl)phenol,
N,N,2,2-tetramethyl-1,3-propanediamine, N,N,N'-trimethyl ethylenediamine, N,N,N',N'-tetramethyl ethylenediamine, N,N,N',N'-tetraethyl ethylenediamine, N,N,N,N-tetramethylhexane-1,6-diamine,
N,N-dimethylpiperazine, triethylenediamine, 4-amino-1-methylpiperidine, 1,4-diazabicyclo[2.2.2]octane, 2-hydroxymethyl triethylenediamine,
1,8-diazabicyclo[5.4.0]-7-undecene, 1,5-diazabicyclo[4.3.0]-5-nonene, 2-methylimidazole, 2-ethyl-4-methylimidazole, 1-cyanoethyl-2-ethyl-4-methylimidazole, 4-[1-(2,3-dimethylphenyl)ethyl]-1H-imidazole, 1-(2-cyanoethyl)-2-undecylimidazole, epoxy-imidazole adduct,

### (Tertiary Triamine)

2,4,6-tris(dimethylaminomethyl)phenol, diethylenetriamine, N,N,N',N",N"-pentamethyldiethylenetriamine, triethylenetetramine, tetraethylenepentamine, heptamethyleneimine, N,N,N',N",N‴,N‴-hexamethyltriethylenetetramine, tris[2-(dimethylamino)ethyl]amine, N,N-bis(2-aminoethyl)methylamine, tris(2-aminoethyl)amine and the like can be mentioned.

### (Polyamine Compound)

lauryl aminopropylamine, compound represented by formula H₂N(C₂H₄NH)ₙH (n≥5) (product name: Poly-8, available from Tosoh Corporation), polyoxypropylene with a primary amino group at the terminal of the molecule (product name: JEFFAMINE SEREIS, available from Suntechno Japan), polyethyleneimine (product name: EPOMIN Series, available from NIPPON SHOKUBAI CO., LTD.), aminoethylated acrylic polymer (product name: POLYMENT Series, available from NIPPON SHOKUBAI CO., LTD.) and the like can be mentioned.

### (2) β-Diketone (B3b)

As the β-diketone (B3b), in particular, the followings can be mentioned for example. The β-diketone (B3b) can be composed of one type of compound or two or more types of compounds.

2,4-Pentanedione (also known as acetylacetone), 3,5-heptanedione, 3-methyl-2,4-pentanedione, 3-ethyl-2,4-pentanedione, 2,2,6,6-tetramethyl-3,5-heptanedione, 2,6-dimethyl-3,5-heptanedione, 6-methyl-2,4-heptanedione, 1,3-cycloheptanedione, 3,4-diacetyl-2,5-hexanedione, 2-acetylcyclopentanone, 1,3-cyclohexanedione, 5,5-dimethyl-1,3-cyclohexanedione, tris(2,4-pentanedionato)aluminum(III), bis(2,4-pentanedionato)cobalt(II), tris(2,4-pentanedionato)cobalt(III), tris(2,4-pentanedionato)chromium(III), bis(2,4-pentanedionato)beryllium(II), bis(2,4-pentanedionato)palladium(II), bis(2,4-pentanedionato)platinum(II), bis(2,4-pentanedionato) copper(II), tris(2,4-pentanedionato) iron(III), bis(2,4-pentanedionato) magnesium(II), tris(2,4-pentanedionato)manganese(III), tetrakis(2,4-pentanedionato)titanium(IV), bis(2,4-pentanedionato)bis(2-propanolato)titanium(IV), bis(2,4-pentanedionato)zinc(II), tetrakis(2,4-pentanedionato)zirconium(IV), bis(2,4-pentanedionato)calcium(II), bis(2,4-pentanedionato) tin(IV) dichloride and the like can be mentioned.

### 1-3. Bleeding Oil (C)

Bleeding oil (C) is a component which bleeds out at the surface of the coating film formed with the composition of the present invention, thereby providing antifouling properties. The amount of the bleeding oil (C) contained in the composition of the present invention is not particularly limited. Here, the content with respect to 100 parts by mass of the organopolysiloxane (A) is preferably 10 to 200 parts by mass, more preferably 50 to 150 parts by mass. When the content of the bleeding oil (C) is less than 10 parts by mass, the antifouling effect may not be exhibited for a long period of time. When the content of the bleeding oil (C) exceeds 200 parts by mass, the strength of the obtained coating film would degrade, and thus the antifouling properties may not be retained.

As the bleeding oil (C), in particular, silicone oil, graft copolymer including acrylic polymer and dimethylpolysiloxane, perfluorinated polyether oil, polyoxyethylene fatty acid ester, sorbitan fatty acid ester, polyoxyethylene sorbitan fatty acid ester, polyoxyethylene castor oil, polyoxyethylene hardened castor oil and the like can be mentioned. One of these compounds can be used alone, or two or more of these compounds can be used in combination.

Bleeding oil (C) has superior compatibility with organopolysiloxane rubber formed by the condensation reaction of the organopolysiloxane (A). Therefore, according to the composition of the present invention, a coating film having superior coating film property which is less likely to delaminate can be suitably formed.

As the bleeding oil, silicone oil and the like which have been conventionally used for silicone rubber based antifouling coating can be used.

The viscosity of the bleeding oil is preferably 20 to 100,000 mm²·s, more preferably 50 to 10,000 mm²·s.

The silicone oil can be categorized into straight silicone oil and modified silicone oil. Here, in the composition of the present invention, either one of these can be used.

As the straight silicone oil, for example, dimethyl silicone oil, methylphenyl silicone oil, diphenyl silicone oil, methylhydrogen silicone oil and the like can be mentioned. Any of these straight silicone oils can be used. Here, methylphenyl silicone oil and the like are preferable.

As a commercially available straight silicone oil, KF-99, KF-9901, KF-50, KF-53, KF-54, KF-56, HIVAC-F-5, X-21-3265, KF-96, (all available from Shin-Etsu Chemical Co., Ltd.); DOWSIL 200Fluid, DOWSIL 510Fluid, DOWSIL SH510Fluid, DOWSIL SH550Fluid, DOWSIL 550Fluid, DOWSIL SH710 Fluid (all available from DuPont Toray Specialty Materials K.K.) Bluesil FLD47V100, Bluesil FLD47V500, Bluesil FLD47V1000, Bluesil FLD550 (all available from Bluestar Silicon Materials Co., Ltd.); TSF451, TSF4300, TSF437, TSF400, TSF401, TSF484, TSF433, TSF431 (all available from Momentive Performance Material, Inc.) and the like can be mentioned.

Modified silicone oil can be categorized as alkyl·aralkyl modification, amino modification, carboxyl modification, epoxy modification, polyether modification, alkyl·aralkyl·polyether modification, polyglycoside modification, polyglycerin modification, polyglycerin·alkyl modification, carbinol modification, methylstyryl modification, alkyl modification, higher fatty acid ester modification, higher fatty acid amide modification, hydrophilic specialized modification, higher alkoxy modification, higher fatty acid containing modification, fluorine modification and the like, depending on the type of the modification. Any of these modified silicone oil can be used. Particularly, silicone oil of amino modification, alkyl·aralkyl modification, epoxy modification, polyether modification or alkyl·aralkyl·polyether modification and the like are preferable.

As a commercially available alkyl·aralkyl modified silicone oil, KF-410, KF-412, KF-414, KF-7235B, X-22-7322, X-22-1877 (all available from Shin-Etsu Chemical Co., Ltd.); TSF4421, XF42-334, XF42-B3629 (all available from Momentive Performance Material, Inc.) can be mentioned.

As a commercially available amino modified silicone oil, DOWSIL BY 16-849 Fluid, DOWSIL 16-853 U Fluid (all available from The Dow Chemical Company); FZ3712, AFL-40 (all available from ENEOS NUC Corporation); KF-859, KF-861, KF-865, X-22-161, KF-8008, X-22-9409, KF-8001 (all available from Shin-Etsu Chemical Co., Ltd.); TSF4700, TSF4701 (all available from Momentive Performance Material, Inc.) can be mentioned.

As a commercially available carboxyl modified silicone oil, DOWSIL BY 16-750 Fluid (available from The Dow Chemical Company); FXZ3707 (available from ENEOS NUC Corporation); X-22-3701E, X-22-3710, X-22-162C (all available from Shin-Etsu Chemical Co., Ltd.) can be mentioned.

As a commercially available epoxy modified silicone oil, DOWSIL BY 16-870 Fluid, DOWSIL BY 16-839 Fluid (all available from The Dow Chemical Company); L-9300, T-29 (all available from ENEOS NUC Corporation); KF-101, KF-102, KF-105 (all available from Shin-Etsu Chemical Co., Ltd.); TSF4730, YF3965 (all available from Momentive Performance Material, Inc.) can be mentioned.

As a commercially available polyether modified silicone oil, DOWSIL SH28 Paint Additive, DOWSIL SF8428 Fluid, DOWSIL SF8427 Fluid, DOWSIL FZ-2104, DOWSIL FZ-2164, DOWSIL FZ-2191, DOWSIL FZ-2101, DOWSIL BY 16-036 (all available from The Dow Chemical Company); KF-945, KF-6015, KF-6017, KF-6020, KF-6123, X-22-4515, X-22-4272 (available from Shin-Etsu Chemical Co., Ltd.); TSF4440, TSF4441, TSF4445, TSF4446, TSF4452, TSF4460 (all available from Momentive Performance Material, Inc.); BELSIL OW 1500, BELSIL DMC 6038, BELSIL DMC 6031 (all available from Wacker Chemie AG) can be mentioned.

As a commercially available alkyl·aralkyl·polyether modified silicone oil, DOWSIL SF8416 Fluid (available from The Dow Chemical Company); X-22-2516, X-22-6548 (all available from Shin-Etsu Chemical Co., Ltd.); TSF4450 (available from Momentive Performance Material, Inc.) can be mentioned.

As a commercially available polyglycoside (sucurose) modified silicone oil, BELSIL SPG 128 VP (available from Wacker Chemie AG) can be mentioned.

As a commercially available polyglycoside (sucurose) ·alkyl modified silicone oil, BELSIL WO 5000 (available from Wacker Chemie AG) can be mentioned.

As a commercially available polyglycerin modified silicone oil, KF-6100, KF-6104, KF-6106 (all available from Shin-Etsu Chemical Co., Ltd.) can be mentioned.

As a commercially available polyglycerin·alkyl modified silicone oil, KF-6105 (available from Shin-Etsu Chemical Co., Ltd.) can be mentioned.

As a commercially available carbinol modified silicone oil, X-22-4015, X-22-160AS, KF-6001, KF-6002, KF-6003, X-22-170DX, X-22-176 (all available from Shin-Etsu Chemical Co., Ltd.) can be mentioned.

As a commercially available higher fatty acid ester modified silicone oil, X-22-715 (available from Shin-Etsu Chemical Co., Ltd.); TSF410, TSF411 (all available from Momentive Performance Material, Inc.) can be mentioned. As a commercially available higher fatty acid amide modified silicone oil, KF-3935 (available from Shin-Etsu Chemical Co., Ltd.) can be mentioned.

As a commercially available graft copolymer including acrylic polymer and dimethylpolysiloxane, KP-578, KP-541, KP-543, KP-545, KP-550, KP-545L all available from Shin-Etsu Chemical Co., Ltd.) can be mentioned.

As a commercially available fluorine modified silicone oil, FL-5, X-22-821, FL-100 (all available from Shin-Etsu Chemical Co., Ltd.) can be mentioned.

As a commercially available perfluorinated polyether oil, FLUOROLINK E10-H, FLUOROLINK 5147X, FLUOROLINK S10, FLUOROLINK MD700, FLUOROLINK AD1700, FLUOROLINK P54, FLUOROLINK TLS 5018, FLUOROLINK F10, FLUOROLINK P56, FLUOROLINK A10P, FLUOROLINK PA100E, FOMBLIN HC/04, FOMBLIN HC/25, FOMBLIN HC/R, FOMBLIN HC/OH-1000, FOMBLIN HC/SA-18 (all available from Solvay SA) can be mentioned.

As a commercially available polyoxyethylene fatty acid ester, polyoxyethylene oleate (product name: NIKKOL MYO-6V, available from Nikko Chemicals Co., Ltd.), polyoxyethylene laurate (product name: NIKKOL MYL-10, available from Nikko Chemicals Co., Ltd.), dioleate PEG-2 (product name: EMALEX DEG-di-O, available from Nihon Emulsion Co., Ltd.), dioleate PEG-6 (product name: EMALEX 300di-O, available from Nihon Emulsion Co., Ltd.), polyoxyethylene (30) lanolin (product name: Aqualose L30, available from Croda International plc)), polyoxyethylene (75) lanolin (product name: PEG-75Flake, available from NK Chemical), polyoxyethylene (3) castor oil (product name NIKKOL CO-3, available from Nikko Chemicals Co., Ltd.), polyoxyethylene (20) castor oil (product name: NIKKOL CO-20, available from Nikko Chemicals Co., Ltd.) can be mentioned.

### 1-4. Crosslinker

The composition of the present invention can contain a crosslinker as necessary. The crosslinker generates silicone rubber by crosslinking the organopolysiloxane (A) three-dimensionally. The content of the crosslinker in the composition of the present invention is not particularly limited, and can be arbitrarily decided depending on the type of the crosslinker and the like. Here, the amount of the crosslinker with respect to 100 parts by mass of the organopolysiloxane (A) is usually 1 to 100 parts by mass, preferably 3 to 80 parts by mass. This content is, particularly for example, 1, 2, 3, 4, 5, 6, 7, 8, 9, 10, 20, 30, 40, 50, 60, 70, 80, 90 or 100, and can be in the range between the two values exemplified herein.

As the crosslinker for example, multifunctional silane compound having two or more functional groups within one molecule, the functional group capable of undergoing hydrolysis by moisture (can be moisture in air), followed by a reaction with cross-linkable functional group of the organopolysiloxane (A), can be used. As the functional group, for example, acyloxy group such as acetoxy group, octanoyloxy group, and benzoyloxy group; alkoxy group such as methoxy group, ethoxy group, and propoxy group; ketoxime group such as methyl ethyl ketoxime group and diethyl ketoxime group; alkenyl group such as isopropenyloxy group and 1-ethyl-2-methylvinyl group; alkylamino group such as dimethylamino group, diethylamino group, and butylamino group; alkylaminoxy group such as dimethylaminoxy group and diethylaminoxy group and the like can be mentioned.

The multifunctional silane compound can further have an organic group other than the functional group mentioned above. As such organic group, those mentioned as the organic group which is positioned at the silicon atom of the organopolysiloxane (A) can be mentioned.

As the multifunctional silane compound, for example, methyl tris (dimethyl ketoxime) silane, methyl tris (methyl ethyl ketoxime) silane, ethyl tris (methyl ethyl ketoxime) silane, methyl tris (methyl isobutyl ketoxime) silane, vinyl tris (methyl ethyl ketoxime) silane, phenyl tris (methyl ethyl ketoxime) silane, tetra (methyl ethyl ketoxime) silane, methyl tri (N,N-diethylamino) silane,
methyl triacetoxy silane, ethyl triacetoxy silane, vinyl triacetoxy silane,
tetramethoxy silane, tetraethoxy silane, tetrapropoxy silane, methyltrimethoxy silane, ethyltrimethoxy silane, methyltriethoxy silane, trimethoxy isopropoxy silane, methoxy triethoxy silane, dimethyl diethoxy silane, vinyl trimethoxy silane, phenyl trimethoxy silane,
methyl triisopropenoxy silane, ethyl triisopropenoxy silane, vinyl triisopropenoxy silane, phenyl triisopropenoxy silane,
and partially hydrolyzed polycondensation products of these can be mentioned. These can be used alone or a mixture of two or more of these can be used.

As a commercially available crosslinker, ethyl silicate 28 (available from COLCOAT CO., LTD.), tetra ethoxy silane (available from TAMA CHEMICALS CO., LTD.), TES 40 WN (available from Wacker Chemie AG), ethyl silicate 40 (available from COLCOAT CO., LTD.), silicate 40 (available from TAMA CHEMICALS CO., LTD.), KBE-13, KBM-13 (all available from Shin-Etsu Chemical Co., Ltd.) can be mentioned.

### 1-5. Inorganic Filler and/or Organic Filler

The composition of the present invention can further contain inorganic filler and/or organic filler for the purpose of controlling flowability and thixotropic property, or for the purpose of improving mechanical strength of the coating film.

As the inorganic filler, for example, calcium carbonate, heavy calcium carbonate, light calcium carbonate, colloidal calcium carbonate, sedimented barium sulfate, barite powder, titanium dioxide, calcined kaolin, calcined kaolin surface-treated with aminosilane, diatom earth, aluminum hydroxide, fine-grained alumina, magnesium oxide, magnesium carbonate, zinc oxide, zinc carbonate, red oxide, iron oxide, fumed metal oxide, quartz powder, talc, zeolite, bentonite, glass fiber, carbon fiber, fine mica powder, fused silica powder, fine silica powder, fumed silica, precipitated silica, wet silica, dry silica, or hydrophobic fumed silica obtained by treating these with organosilicon compound such as methyl trichlorosilane, dimethyl dichlorosilane, hexamethyl disilazane, hexamethyl cyclotrisiloxane and okramethyl cyclotetrasiloxane, phthalocyanine blue, carbon black and the like can be mentioned.

As the organic filler for example, powder of synthetic resin such as polypropylene, polyvinylchloride, polystyrene, acryl silicone and the like can be mentioned.

These inorganic filler and/or organic filler can be used alone or two or more of these can be used in combination.

As a commercially available inorganic filler and/or organic filler, AEROSIL R972, AEROSIL R974, AEROSIL R976, AEROSIL RX200, AEROSIL RX300, AEROSIL VP4200 (all available from NIPPON AEROSIL CO., LTD.) and the like can be mentioned.

The content of the inorganic filler in the composition of the present invention is usually 1 to 100 parts by mass with respect to 100 parts by mass of organopolysiloxane (A), preferably 2 to 60 parts by mass. This content is, particularly for example, 1, 2, 3, 4, 5, 6, 7, 8, 9, 10, 20, 30, 40, 50, 60, 70, 80, 90, or 100, and can be in the range between the two values exemplified herein.

### 1-6. Antifouling Agent

The composition of the present invention can further contain antifouling agent. As the antifouling agent, for example, inorganic agent and organic agent can be mentioned.

As the inorganic agent, for example, cuprous oxide, cuprous thiocyanate (generic name: copper rhodanide), copper powder, copper carbonate, copper chloride, copper-nickel alloy, brass, silver chloride, silver nitrate and the like can be mentioned. Among these, cuprous oxide and copper rhodanide are preferable. With respect to cuprous oxide, the one having its surface treated with glycerin, sucrose, stearic acid, lauric acid, lysine, mineral oil and the like are preferable in terms of long term stability during storage.

As a commercially available antifouling agent, NC-803, NC-301 (available from NISSIN CHEMCO), RED COPP 97N Premium, LOLO TINT (available from KEMET Corporation), STANDARD 7600 Copper, STANDART RESIST LT Copper Powder, STANDART Lac E 900 Copper Powder (all available from ECKART GmbH) can be mentioned.

As the organic agent, for example, copper 2-mercaptopyridine-N-oxide (generic name: copper pyrithione), zinc 2-mercaptopyridine-N-oxide (generic name: zinc pyrithione), zinc ethylenebis dithiocarbamate (generic name: Zineb), zinc dimethyldithiocarbamate (generic name: Ziram), a complex compound of manganese N,N'-ethylenebis (dithiocarbamate) and zinc N,N'-ethylenebis (dithiocarbamate) (generic name : Mancozeb), pyridine-triphenylborane, 4,5-dichloro-2-n-octyl-3-isothiazolone (generic name : SEA-NINE 211), 3,4-dichlorophenyl-N-N-dimethylurea (generic name: Diuron), 2-methylthio-4-t-butylamino-6-cyclopropylamino-s-triazine (generic name: Irgarol 1051), 2-(p-chlorophenyl)-3-cyano-4-bromo-5-trifluoromethyl pyrrole (generic name : Tralopyril), (±) 4-[1-(2,3-dimethylphenyl)ethyl]-1H-imidazole (generic name : Medetomidine), N-{ [dichloro(fluoro)methyl]sulfanyl}-N',N'-dimethyl-N-p-tris sulfamide (generic name : Tolylfluanid), N-(dichlorofluoromethylthio)-N-(dimethylaminosulfonyl)aniline (generic name : Dichlofluanid), N-[(4-hydroxy-3-methoxyphenyl)methyl]-8-methyl-6-nonenamide (generic name : Capsaicin), 5,10-dihydro-5,10-dioxonaphto[2,3-b]-1,4-dithi-ine-2,3-dicarbonitrile (generic name : Dithianon), Avermectin Bla, Avermectin Blb and the like can be mentioned. One or two or more of these antifouling agent can be used in combination.

### 1-7. Organic Solvent

The composition of the present invention is usually dissolved or dispersed in organic solvent. Accordingly, the composition can be suitably used as coating. As the organic solvent, for example, xylene, toluene, hexane, heptane, octane, cyclohexane, acetone, methyl ethyl ketone, methyl isobutyl ketone, diisobutyl ketone, butyl acetate, 2-ethoxyethyl acetate, propanol, isoamyl alcohol, n-butanol, propylene glycol monomethyl ether, ethylene glycol monomethyl ether, ethylene glycol monoethyl ether, ethylene glycol tertiary butyl ether, ethylene glycol monobutyl ether, 3-methoxy-3-methyl-1-butanol, ethylene glycol monopropyl ether, ethylene glycol phenyl ether, diethylene glycol monobutyl ether, dipropylene glycol monomethyl ether, ethylene glycol, diethylene glycol, propylene glycol, decamethylcyclopentasiloxane, octamethyltrisiloxane, aromatic hydrocarbon, aliphatic hydrocarbon, white spirit, alicyclic hydrocarbon based solvent, naphthene based hydrocarbon, mineral spirit, aliphatic solvent naphtha, isoparaffin, normal paraffin, glycol-based ester and the like can be mentioned.

As the aromatic hydrocarbon, for example, ShellSol A100 (registered trademark, available from Shell Chemicals Japan Ltd.), T-SOL 100, T-SOL 150 (all registered trademark, available from ENEOS Corporation), Suwazol 1000 (registered trademark, available from Maruzen Petrochemical Co., Ltd.), Solvent #100 (registered trademark, available from SANKYO CHEMICAL CO.,LTD.) and the like can be mentioned.

As the aliphatic hydrocarbon solvent, for example, T-SOL 3040, T-SOL AN45 (all available from ENEOS Corporation) and the like can be mentioned.

As the white spirit, for example, LAWS, HAWS (all available from Shell Chemicals Japan Ltd.) and the like can be mentioned.

As the alicyclic hydrocarbon solvent, for example, methyl cyclohexane, ethyl cyclohexane, dimethyl cyclohexane, Ricasolv 900 (hydrogenated C9 high boiling point aromatic hydrocarbon based solvent), Ricasolv 1000 (hydrogenated C10 high boiling point aromatic hydrocarbon based solvent), (all available from New Japan Chemical Co., Ltd.) and the like can be mentioned.

As the naphthene based hydrocarbon, for example, Swascreen 150 (available from Maruzen Petrochemical Co., Ltd.) ShellSol D40 (registered trademark, available from Shell Chemicals Japan Ltd.), EXXSOL DSP145/160, EXXSOL D40 (all registered trademark, available from Exxon Mobil Corporation), Naphthesol 160, Naphthesol 200 (all registered trademark, available from ENEOS Corporation) and the like can be mentioned.

As the isoparaffin, for example, ISOPAR G, ISOPAR H (all registered trademark, available from Exxon Mobil Corporation) and the like can be mentioned.

As the normal paraffin, for example, NORPAR 10, NORPAR 12 (all registered trademark, available from Exxon Mobil Corporation), Shellsol TG, Shellsol TK, Shellsol TM, Shellsol S (all registered trademark, available from Shell Chemicals Japan Ltd.) and the like can be mentioned.

As the glycol-based ester, propylene glycol monomethyl ether acetate, propylene glycol monoethyl ether acetate and the like can be mentioned.

These organic solvents can be used alone, or two or more of these can be blended and used.

### 1-8. Curing Catalyst Other Than Curing Catalyst (B)

The composition of the present invention can contain metal curing catalyst used as silicone curing catalyst as necessary, in addition to the curing catalyst (B).

As the metal curing catalyst, for example, organotitanate such as tetrabutyl titanate and tetraisopropyl titanate; organotitanium chelate such as diisopropoxy bis(acetylacetonate)titanium and diisopropoxy bis(ethylacetoacetate)titanium; organic aluminum compound such as aluminum tris (acetylacetonate) and aluminum tris (ethylacetoacetate); organic zirconium compound such as zirconium tetra(acetylacetonate) and zirconium tetrabutyrate and the like can be mentioned. These can be used alone, or two or more of these can be used in combination.

### 1-9. Other Additive and the Like

The antifouling coating composition of the present invention can contain coating film forming component other than the organopolysiloxane (A), plasticizer, release modifier, pigment such as colored pigment, constitutional pigment, and anti-corrosion pigment, dehydrating agent, anti-tarring agent, silane coupling agents and the like as necessary.

As the coating film forming component other than the organopolysiloxane (A), silicone modified epoxy resin, acryl resin, trialkyl silyl (meth)acrylate copolymer resin, polyester resin, polyester polyol resin, biodegradable bio-polyester resin, epoxy resin, maleic acid based copolymer resin, silicone modified acryl resin, fluorine resin, polybutene resin, urethane resin, urethane rubber, polyester modified silicone, silicone rubber, nitrile rubber, isoprene rubber, natural rubber, polyamide resin, polybutadiene resin, polybutadiene with both end terminated by hydroxyl group, styrene·butadiene copolymer resin, ethylene·vinyl acetate copolymer resin, petroleum resin, alkyd resin, vinylether·vinylchloride copolymer resin, vinylchloride resin, chlorinated rubber, chlorinated polyolefin resin and the like can be mentioned. These can be used alone, or two or more of these can be used in combination.

As the plasticizer, for example, phosphate ester, phthalate ester, adipate ester, sebacate ester, epoxidized soybean oil, alkyl vinyl ether polymer, polyalkylene glycol, t-nonyl pentasulfide, vaseline, polybutene, tris(2-ethylhexyl) trimellitate, silicone oil, chlorinated paraffin, paraffin and the like can be mentioned. These can be used alone, or two or more of these can be used in combination. The content of the plasticizer is usually approximately 20 parts by mass or less with respect to 100 parts by mass of the organopolysiloxane (A), preferably 1 to 10 parts by mass.

As the release modifier, for example, rosin, rosin derivative, monocarboxylic acid and salts thereof such as naphthenic acid, cycloalkenyl carboxylic acid, bicycloalkenyl carboxylic acid, versatic acid, trimethyl isobutenyl cyclohexene carboxylic acid, and metal salts thereof, or the alicyclic hydrocarbon resin, coumaron resin can be mentioned. These can be used alone, or two or more of these can be used in combination.

As the rosin derivative, hydrogenated rosin, disproportionated rosin, maleic acid modified rosin, formylated rosin, polymerized rosin, rosin ester, hydrogenated rosin ester and the like can be exemplified.

As the alicyclic hydrocarbon resin, for example, Quintone 1500, Quintone 1525L, and Quintone 1700 (product name, available from Zeon Corporation) and the like can be mentioned as commercially available product for example.

As the coumaron resin, NITTO RESIN COUMARON G-90, L-5, L-20 (product name, available from NITTO CHEMICAL CO., LTD.) can be mentioned.

Among these, rosin, rosin derivative, naphthenic acid, versatic acid, trimethyl isobutenyl cyclohexene carboxylic acid or metal salts thereof are preferable.

As the dehydrating agent, zeolite (registered trademark, molecular sieve 4A, available from UNION SHOWA K.K.), calcium sulfate anhydrite (D-1N, available from NORITAKE CO., LIMITED), calcium sulfate hemihydrite (NP3D, available from NORITAKE CO., LIMITED), tetra methoxy silane, tetra ethoxy silane, methyl trimethoxy silane, vinyl trimethoxy silane, methyl triisopropenoxy silane, ethyl triisopropenoxy silane, vinyl triisopropenoxy silane (LS-3975, available from Shin-Etsu Chemical Co., Ltd.) and the like can be mentioned. These can be used alone, or two or more of these can be used in combination.

### 2. Manufacturing Method of Antifouling Coating Composition

The antifouling coating composition of the present invention can be prepared by mixing and dispersing the organopolysiloxane (A), curing catalyst (B), bleeding oil (C), and if necessary, crosslinker, inorganic filler, antifouling agent, organic solvent, plasticizer, dehydrating agent and the like, using high-speed disperser such as paint shaker, mixer, and dissolver; ultrasonic homogenizer, ball mill, planetary ball mill, pearl mill, wet jet mill, and grinder.

The antifouling coating composition of the present invention can be provided as one-pack coating or two or more multi-pack coating. When the composition is provided as the two or more multi-pack coating, each of the mixture contains 1 or a plurality of components, packaged in a separate container such as a can, and is stored as such. For example, a mixture containing organopolysiloxane (A) having 1 or more types of cross-linkable functional groups as a major component is designated as liquid a, and a mixture containing 1 or more types of crosslinkers as a major component is designated as liquid b, the antifouling coating composition of the present invention is prepared by mixing liquid a and liquid b.

As a manufacturing method of a composition in which the organopolysiloxane (A) contained in the composition of the present invention is converted into organopolysiloxane rubber before-hand, the following can be mentioned for example. Under existence of moisture, organopolysiloxane (A) and the curing catalyst (B) are mixed, and the cross-linkable functional group in the organopolysiloxane (A) and the cross-linkable functional group in the other organopolysiloxane (A) or the hydrolyzable group in the crosslinker are allowed to undergo condensation reaction usually at 25 to 80°C, preferably at 25 to 50°C, thereby obtaining the organopolysiloxane rubber. Subsequently, the organopolysiloxane rubber and the bleeding oil (C) are mixed.

### 3. Method for Antifouling Treatment

The method for antifouling treatment of the present invention is characterized in that the afore-mentioned antifouling coating composition is used to form an antifouling coating film on the surface of an object that is subjected to coating. The method for antifouling treatment of the present invention can prevent adhesion of aquatic fouling organisms for a long period of time by the gradual dissolution of the surface of the antifouling coating film such that the surface of the coating film is continually renewed. After the dissolution of the coating film, the antifouling effect can be continuously exhibited by recoating the composition.

Since curing of the coating composition of the present invention proceed gradually by absorbing moisture in air, it is preferable to prepare the composition just before use and coat the composition as soon as possible after preparation.

As the object that is subjected to coating, ships; fishing tools such as fishing nets (aquaculture nets, fixed nets and the like), fishing net accessories; jetties, tetrapods, port facilities, buoys, pipelines, bridges, water pipes of power plants, submarine bases, submarine oil drilling facilities, and other underwater structures and the like can be mentioned.

The antifouling coating film of the present invention can be formed by applying the antifouling coating composition on the surface (entirely or partially) of the object that is subjected to coating.

Application of the antifouling coating composition can be performed by applying the composition one time, or by overcoating the composition by plurality of times by known coating method.

Examples of the coating method include brush coating, spray coating, dipping, flow coating, and spin coating. These coating methods can be employed singly or in combination.

After the coating, moisture (moisture in air for example) is absorbed, and the curing proceeds, thereby forming the antifouling coating film of the present invention. Curing proceeds also at ambient temperature (25°C). Here, for example, curing can be accelerated by heating up to approximately 80°C.

### 4. Antifouling Coating Film and Coated Object

The antifouling coating film can be formed by using the composition of the present invention.

The thickness of the antifouling coating film can be suitably selected depending on the type of the object that is subjected to coating. Usually, coating process in which 30 to 400 µm is provided per coating process, preferably 30 to 200 µm per coating process is performed for a plurality of times, and suitable film thickness after curing is 100 to 1000 µm.

The coated object of the present invention has the antifouling coating film on its surface. The coated object can have the antifouling coating film on its entire surface, or on its partial surface.

The coated object of the present invention can exhibit the antifouling effect continuously. Accordingly, the coated object can be suitably used as the ship (in particular, ship bottom), fishing tools, structures submerged in seawater and the like.

For example, when the antifouling coating film is formed on the surface of a ship bottom, the antifouling coating film gradually dissolves from the surface, so that the coating film surface is always renewed. This prevents the adhesion of aquatic fouling organisms.

Further, the hydrolysis speed of the antifouling coating film in seawater is controlled adequately. Accordingly, the ship can maintain the antifouling properties for a long period of time. For example, when the ship is in a static state such as during the anchorage period and during the rigging period, adhesion and accumulation of the aquatic fouling organisms hardly occur, thereby exhibiting antifouling effect for a long period of time.

In addition, the surface of the antifouling coating film is basically free from cracks or peeling even after a long period of time. Accordingly, it is not necessary to completely remove the existing coating film before re-forming a new coating film. Thus, by directly recoating the antifouling coating film composition, the antifouling coating film can be effectively formed. This makes it possible to continuously maintain the antifouling properties in a simple and inexpensive manner.

### EXAMPLE

Examples and the like are provided hereinafter, and further clarify characteristics of the present invention. The present invention, however, is not limited to these Examples and the like.

In each of Production Examples, Examples, and Comparative Examples, "%" denotes "mass%".

### 1. Production Example of Organopolysiloxane (A)

### <Production Example 1 (Production of Organopolysiloxane (A1)>

To a four-necked flask equipped with a thermometer, condenser and a stirrer, 200g of polydimethyl siloxane having vinyl at both terminals (product name : DMS-V33, available from Gelest, Inc., amount of vinyl functional group : 0.012 mol), 2.0g of mercaptomethyl trimethoxysilane (LS-535, available from Shin-Etsu Chemical Co., Ltd., amount of mercapto functional group : 0.012 mol), and 0.1g of 2,2'-azobis(2-methylbutyronitrile) were charged, and the mixture was agitated at 90°C for 3 hours. The reaction was terminated after confirming the disappearance of the absorption peak derived from the vinyl group and mercapto group of the raw material by IR. By these processes, organopolysiloxane (A1) as the polydimethyl siloxane having trimethoxysilyl methylthioethyl group at both terminals was produced. The viscosity of the organopolysiloxane (A1) was 3,400 mPa·s.

### <Production Example 2 (Production of Organopolysiloxane (A2)>

To a four-necked flask equipped with a thermometer, condenser and a stirrer, 200g of polydimethyl siloxane having vinyl at both terminals (product name : DMS-V33, available from Gelest, Inc., amount of vinyl functional group : 0.012 mol), 2.4g of mercaptopropyl trimethoxysilane (KBM-803, available from Shin-Etsu Chemical Co., Ltd., amount of mercapto functional group : 0.012 mol), and 0.1g of 2,2'-azobis(2-methylbutyronitrile) were charged, and the mixture was agitated at 90°C for 3 hours. The reaction was terminated after confirming the disappearance of the absorption peak derived from the vinyl group and mercapto group of the raw material by IR. By these processes, organopolysiloxane (A2) as the polydimethyl siloxane having trimethoxysilyl propylthioethyl group at both terminals was produced. The viscosity of the organopolysiloxane (A2) was 3,300 mPa·s.

### 2. Production Example of Salt of Nitrogen Containing Compound and Organic Acid (B1)

### <Production Example 3 (Production of Salt of Nitrogen Containing Compound (Primary Amine) and Organic Acid (B11)>

To a four-necked flask equipped with a thermometer, condenser and a stirrer, 51.0g (0.39 mol) of 1-amino-2-ethylhexane was charged. While cooling and agitating, 70.6g (0.41 mol) of neodecanoic acid was added in a dropwise manner over 20 minutes. The reaction was terminated after confirming the appearance of amine salt peak derived from the product and disappearance of the absorption peak derived from the amine and carbonyl group of the raw material by IR. By these processes, salt of 1-amino-2-ethylhexane and neodecanoic acid (B11) was produced.

### <Production Example 4 (Production of Salt of Nitrogen Containing Compound (Secondary Amine) and Organic Acid (B12)>

To a four-necked flask equipped with a thermometer, condenser and a stirrer, 55.3g (0.65 mol) of pentamethylene imine was charged. While cooling and agitating, 110.6g (0.77 mol) of 2-ethylhexanoic acid was added in a dropwise manner over 20 minutes. The reaction was terminated after confirming the appearance of amine salt peak derived from the product and disappearance of the absorption peak derived from the amine and carbonyl group of the raw material by IR. By these processes, salt of pentamethylene imine and 2-ethylhexanoic acid (B12) was produced.

### <Production Example 5 (Production of Salt of Nitrogen Containing Compound (Tertiary Amine) and Organic Acid (B13)>

To a four-necked flask equipped with a thermometer, condenser and a stirrer, 150g (0.95 mol) of N,N-dimethyl-n-octyl amine was charged. While cooling and agitating, 172g (1.00 mol) of neodecanoic acid was added in a dropwise manner over 20 minutes. The reaction was terminated after confirming the appearance of amine salt peak derived from the product and disappearance of the absorption peak derived from the amine and carbonyl group of the raw material by IR. By these processes, salt of N,N-dimethyl-n-octyl amine and neodecanoic acid (B13) was produced.

### <Production Example 6 (Production of Salt of Nitrogen Containing Compound (Primary Amino Silane) and Organic Acid (B14)>

To a four-necked flask equipped with a thermometer, condenser and a stirrer, 75.3g (0.34 mol) of 3-(triethoxysilyl)propylamine (product name "KBE-903", available from Shin-Etsu Chemical Co., Ltd.) and 29.9g of xylene were charged. While cooling and agitating, 62.0g (0.36 mol) of neodecanoic acid was added in a dropwise manner over 20 minutes. The reaction was terminated after confirming the appearance of amine salt peak derived from the product and disappearance of the absorption peak derived from the amine of the raw material by IR. By these processes, salt of 3-(triethoxysilyl)propylamine and neodecanoic acid (B14) as 80% xylene solution was produced.

### <Production Example 7 (Production of Salt of Nitrogen Containing Compound (Primary and Secondary Amino Silane) and Organic Acid (B15) >

To a four-necked flask equipped with a thermometer, condenser and a stirrer, 59g (0.27 mol) of N-2-aminoethyl-3-aminopropyltrimethoxysilane was charged. While cooling and agitating, 95g (0.55 mol) of neodecanoic acid was added in a dropwise manner over 20 minutes. The reaction was terminated after confirming the appearance of amine salt peak derived from the product and disappearance of the absorption peak derived from the amine and carbonyl group of the raw material by IR. By these processes, salt of N-2-aminoethyl-3-aminopropyltrimethoxysilane and neodecanoic acid (B15) was produced.

### <Production Example 8 (Production of Salt of Nitrogen Containing Compound (Ketimine Silane) and Organic Acid (B16)>

To a four-necked flask equipped with a thermometer, condenser and a stirrer, 150g (0.56 mol) of 3-triethoxysilyl-N-(1,3-dimethylbutyridene)propylamine was charged. While cooling and agitating, 98.5g (0.57 mol) of neodecanoic acid was added in a dropwise manner over 20 minutes. The reaction was terminated after confirming the appearance of amine salt peak derived from the product and disappearance of the absorption peak derived from the amine and carbonyl group of the raw material by IR. By these processes, salt of 3-triethoxysilyl-N-(1,3-dimethylbutyridene)propylamine and neodecanoic acid (B16) was produced.

### <Production Example 9 (Production of Salt of Nitrogen Containing Compound and Organic Acid (B17)>

To a four-necked flask equipped with a thermometer, condenser and a stirrer, 75.0g (0.49 mol) of 1,8-diazabicyclo[5.4.0]-7-undecene (DBU) was charged. While cooling and agitating, 75.0g (0.52 mol) of 2-ethylhexanoic acid was added in a dropwise manner over 20 minutes. The reaction was terminated after confirming the appearance of amine salt peak derived from the product and disappearance of the absorption peak derived from the amine and carbonyl group of the raw material by IR. By these processes, salt of 1,8-diazabicyclo[5.4.0]-7-undecene and 2-ethylhexanoic acid (B17) was produced.

### 3. Examples·Comparative Examples

The antifouling coating composition of Examples 1 to 40 and Comparative Examples 1 to 5 shown in Tables 15 to 17 were prepared as two packs-constitution including liquid a containing component a and liquid b containing component b. Liquid a and liquid b were prepared in accordance with the formulation shown in Tables 1 to 14.

The antifouling coating composition of Examples 41 to 46 shown in Table 17 were prepared as one pack-constitution including component a and component b. The components contained in component a and component b are as shown in Table 4 and Table 13.

### 4. Test Example

With the antifouling coating composition of Examples and Comparative Examples, test of Test Examples 1 to 3 were performed. Regarding the antifouling coating composition having the two packs-constitution, liquid a and liquid b were uniformly mixed using a mixer immediately before the test, and was used as the sample for test. Regarding the antifouling coating composition having the one pack-constitution, the composition was used as it was as the sample for test. Results of the Test Examples 1 to 3 are shown in Tables 15 to 17.

### 4-1. Test Example 1 (Curability Test)

The sample for test was applied on a glass plate so that the dried film thickness would be 200µm, and then tack free time was measured in accordance with JIS K 6249. The test conditions were set as 20 to 25°C, 50 to 60 RH%, and 20 to 25°C, 20 to 30 RH%.

### 4-2. Test Example 2 (Adhesiveness Test)

Epoxy based primer HEMPADUR QUATTRO XO 17870 (available from HEMPEL A/S) was applied on a hard vinyl chloride plate (110 x 60 x 2 mm) so that the dried film thickness would be 100µm. Subsequently, the sample for test was applied thereon so that the thickness of the dried coating film would be 200µm, followed by curing at room temperature for 48 hours, thereby obtaining the test plate. An X-shaped cut that reaches the antifouling coating was made using a cutter, and then the test plate was rubbed with a finger in a direction perpendicular to the cut. The adhesiveness of the coating film was evaluated in accordance with the following criteria.
A: coating film does not peel off
B: coating film peeled off partially around the cut
X: coating film peeled off easily

### 4-3. Test Example 3 (Antifouling Property Test)

Epoxy based primer HEMPADUR QUATTRO XO 17870 (available from HEMPEL A/S) was applied on a hard vinyl chloride plate (110 x 60 x 2 mm) so that the dried film thickness would be 100µm. Further, silicone based tie coat HEMPASIL NEXUS X-TEND 27500 (available from HEMPEL A/S) was applied so that the dried film thickness would be 100µm. Subsequently, the sample for test was applied thereon so that the thickness of the dried coating film would be 200µm, followed by curing at room temperature for 7 days. The test plate was immersed at 2.0 m below sea level in Owase Bay for 12 months, and the test plate fouling due to attached objects was examined after 3 months, 6 months, and 12 months.

The state of the surface of the coating film was visually evaluated in accordance with criteria shown below.
A: Fouling organisms such as shellfish or algae do not attach, and slime do not attach.
B: Fouling organisms such as shellfish or algae do not attach, and slime attaches.
C: Fouling organisms such as shellfish or algae attach partially.
X: Fouling organisms such as shellfish or algae attach entirely.

### 5. Discussion

All of the Examples had a tack free time of 180 minutes or less, adhesiveness was superior, and long term antifouling properties was superior. As shown in Test Example 2, adhesiveness with epoxy based coating film was superior.

Comparative Examples which do not contain any one of components (B1) to (B3) had a too long tack free time, or either one of adhesiveness and long term antifouling properties was not superior.

In Comparative Example 1 which contained tin catalyst, curing was slow under low moisture condition. On the other hand, in the Examples, curing rate did not change even under low moisture condition.

In Comparative Example 2 which do not contain amine compound, sample did not cure.

In Comparative Examples 3 to 5 which contain amine compound (B1a, B3a), but do not contain any one of organic acid (B1b) and β-diketone (B3b), the amine compound reacted with the antifouling agent and decomposed. Therefore, the antifouling effect was greatly deteriorated.

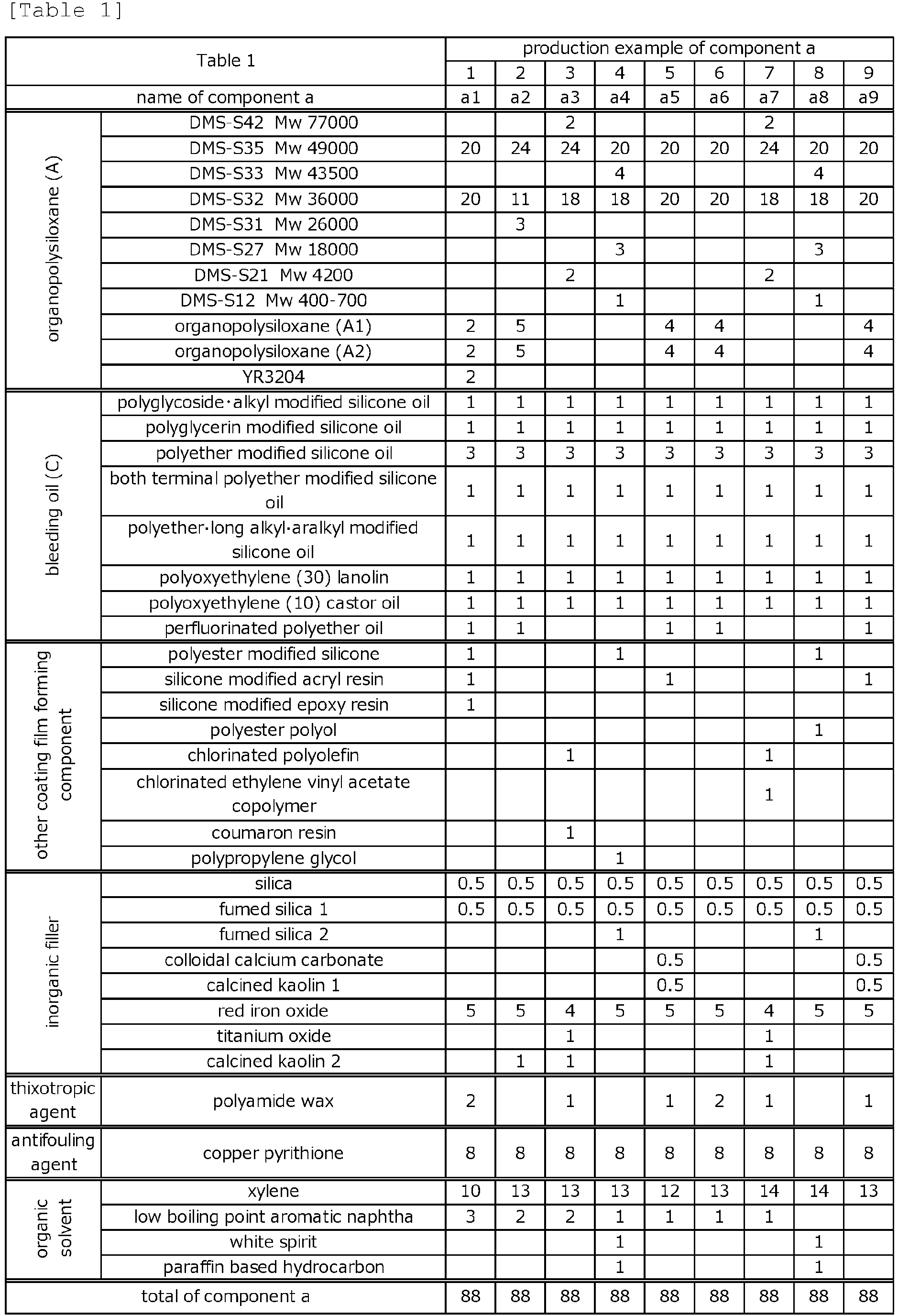

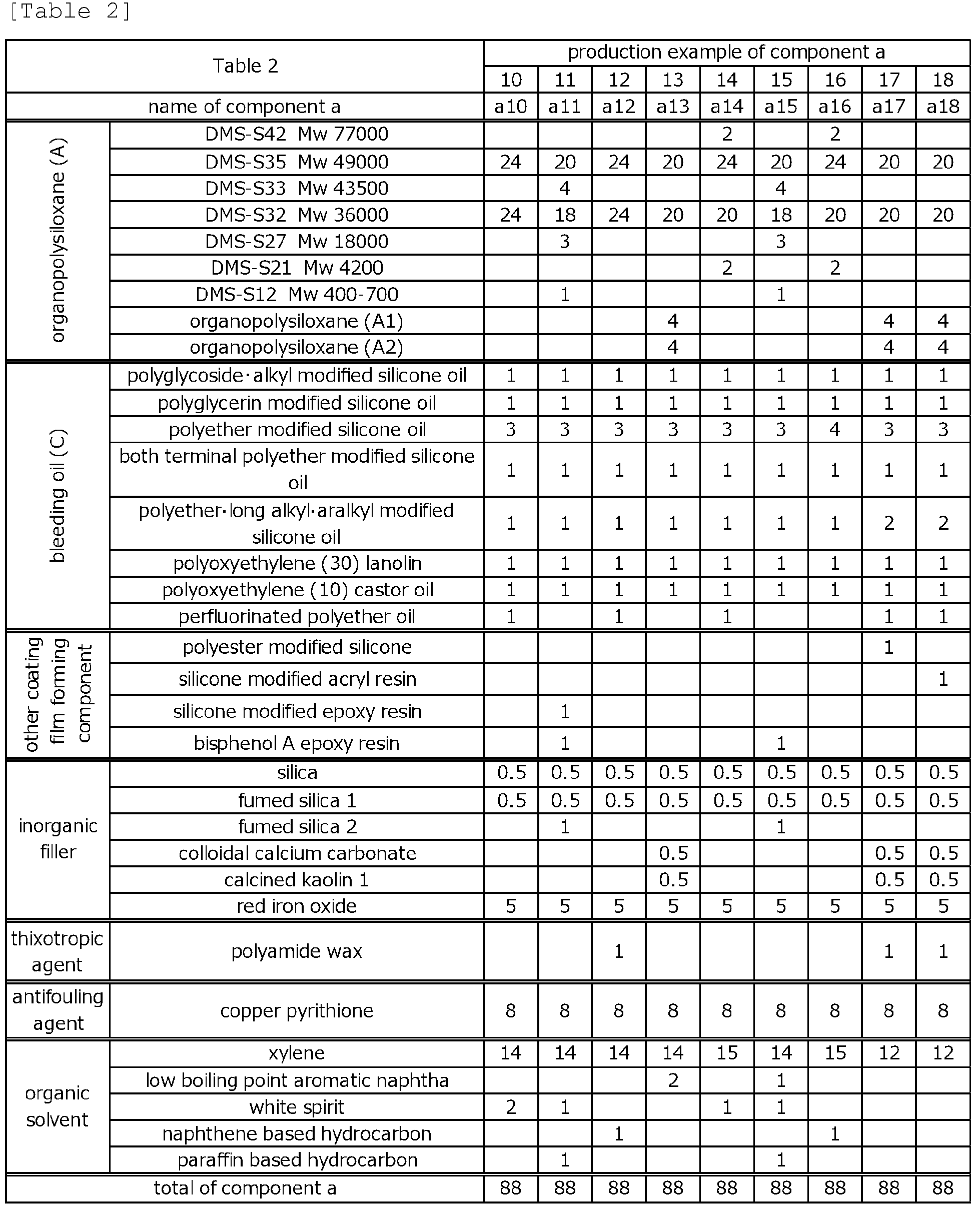

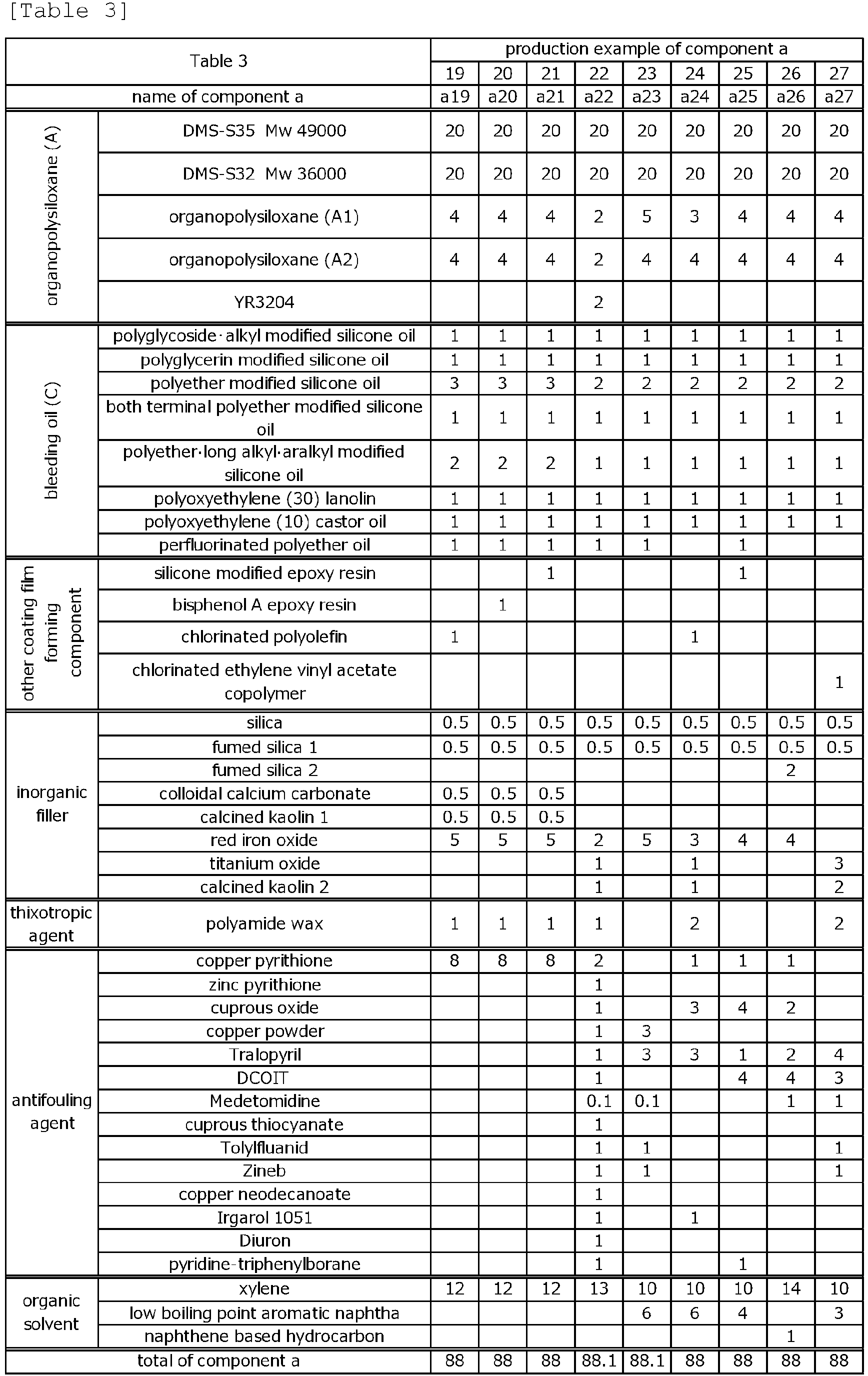

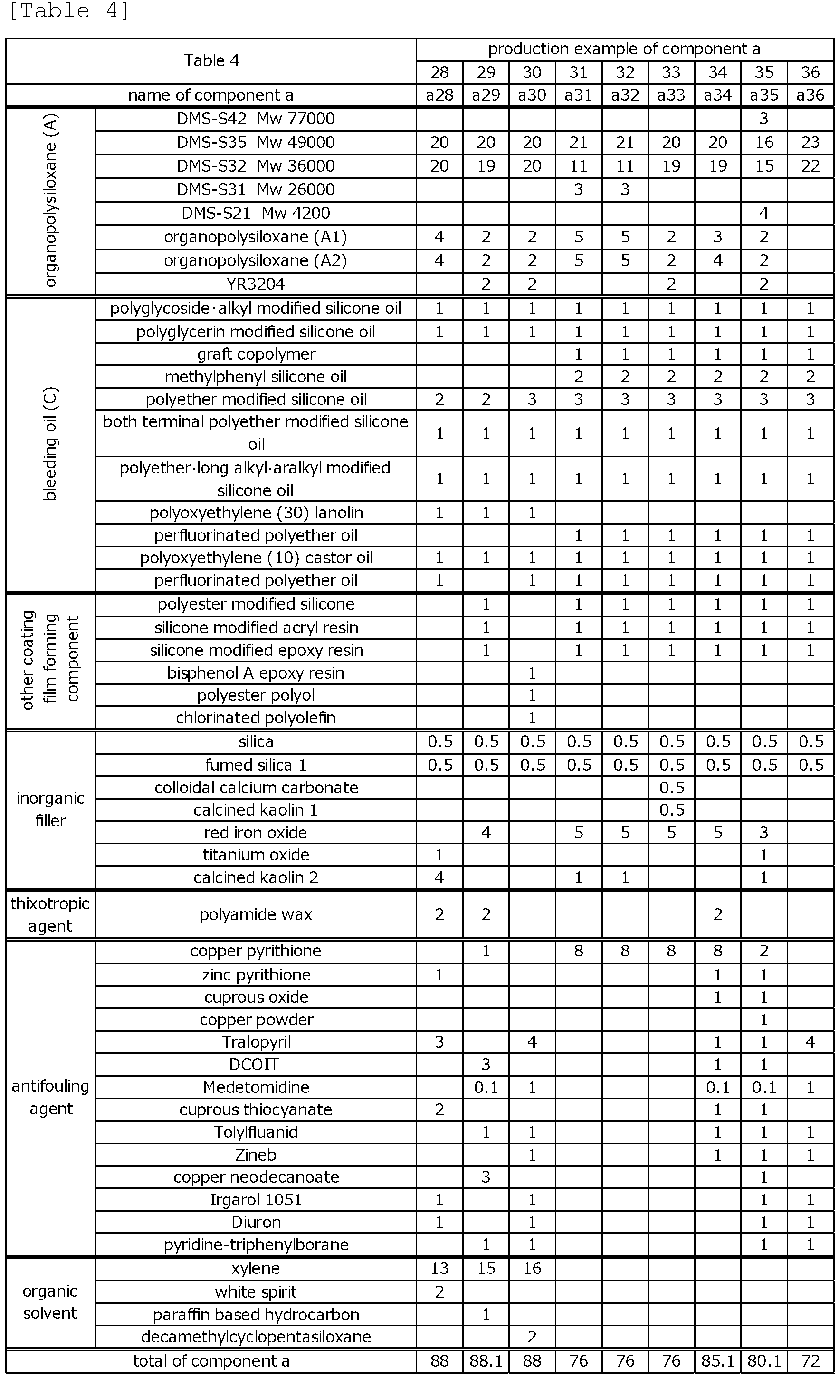

**[Table 5]**

| Table 5 | | | | production example of component b | | | | |
|---|---|---|---|---|---|---|---|---|
| | | | | 1 | 2 | 3 | 4 | 5 |
| name of component b | | | | b1 | b2 | b3 | b4 | b5 |
| curing agent (B) | B1 | B1a | pentamethyleneimine | | | 0.3 | | |
| | | | N,N-dimethyl-n-octylamine | | 0.2 | | | |
| | | | 1,4-diazabicyclo[2.2.2]octane | | 0.2 | | | |
| | | | 3-(trimethoxysilyl)propylamine | 1.5 | 0.6 | 0.7 | 0.3 | 1.1 |
| | | | 3-(triethoxysilyl)propylamine | | | | 0.2 | |
| | | | aminosilane-containing silane oligomer | | | | | 0.2 |
| | | | N-phenyl-3-aminopropyltrimethoxysilane | | | | 0.1 | |
| | | | N, N, N -tris(3-trimethoxysilylpropyl) isocyanurate | | | | 0.2 | |
| | | | N,N,N',N'-tetramethyl-N"-[3-(trimethoxysilyl)propyl]guanidine | | | | | 0.2 |
| | | B1b | 2-ethylhexanoic acid | | | | 0.5 | 1.1 |
| | | | neodecanoic acid | 1.5 | 1.3 | 1.4 | 0.2 | 0.2 |
| | | | naphthenic acid | | 0.3 | | | |
| | | | oleic acid | | | | 0.4 | 0.3 |
| | | | rosin acid | | | 0.2 | | |
| | | | 4-methylhexahydrophthalic anhydride/hexahydrophthalic anhydride | | | | 0.2 | |
| metal curing catalyst | | | dibutyltin dilaurate | 0.5 | | | | |
| crosslinker | | | partially hydrolyzed polycondensation products of tetra ethoxy silane | 2.1 | 2 | 2 | 2 | 2.5 |
| | | | tris (isopropenyloxy)vinylsilane | 0.1 | 0.3 | | | |
| | | | triacetoxy ethylsilane | 0.1 | 0.2 | | 0.5 | |
| | | | methyl tris[[(1-methylpropylidene)amino]oxy]silane | 0.1 | | | | |
| | | | tetra-n-propylsilicate | 0.1 | | 0.5 | | |
| bleeding oil (C) | | | graft copolymer | | | 1 | | |
| | | | methylphenyl silicone oil | 2 | 2 | 2 | 2 | 2 |
| organic solvent | | | dipropylene glycol | 0.5 | 1.4 | 1 | | |
| | | | diethylene glycol monobutyl ether | 0.5 | | | | 1 |
| | | | n-butanol | | | | 1.4 | |
| | | | xylene | 3.5 | 3.5 | 2.9 | 4 | 3.4 |
| total of component b | | | | 12.5 | 12 | 12 | 12 | 12 |

**[Table 6]**

| Table 6 | | | | production example of component b | | | | |
|---|---|---|---|---|---|---|---|---|
| | | | | 6 | 7 | 8 | 9 | 10 |
| name of component b | | | | b6 | b7 | b8 | b9 | b10 |
| curing agent (B) | B1 | B1a | pentamethyleneimine | | 0.2 | | | |
| | | | N,N-dimethyl-n-octylamine | | | | 0.2 | |
| | | | 1,4-diazabicyclo[2.2.2]octane | | 0.2 | | | |
| | | | 3-(triethoxysilyl)propyla mine | | | | 0.2 | |
| | | | N-2-aminoethyl-3-aminopropyltrimethoxysilane | 1.5 | 0.6 | 1.3 | 0.5 | 0.7 |
| | | | N-2-(aminoethyl)-8-aminooctyltrimethoxysilane | | | 0.2 | | |
| | | | N-phenyl-3-aminopropyltrimethoxysilane | | | | | 0.1 |
| | | | N, N, N -tris(3-trimethoxysilylpropyl) isocyanurate | | | | | 0.2 |
| | | | N,N,N',N'-tetramethyl-N"-[3-(trimethoxysilyl)propyl]guanidine | | | 0.2 | | 0.2 |
| | | B1b | 2-ethylhexanoic acid | | | 1.1 | | 0.3 |
| | | | neodecanoic acid | 1.3 | 0.5 | | 0.5 | 0.6 |
| | | | naphthenic acid | | | | 0.3 | |
| | | | oleic acid | | | 0.2 | | |
| | | | rosin acid | | 1.4 | | | |
| | | | 4-methylhexahydrophthalic anhydride/hexahydrophthalic anhydride | | | | 0.2 | |
| metal curing catalyst | | | zirconium(neodecanate)₃(acetylacetonate) | | | | | 0.3 |
| crosslinker | | | partially hydrolyzed polycondensation products of tetra ethoxy silane | 2 | 2.1 | 2.3 | 2.3 | 2 |
| | | | tris (isopropenyloxy)vinylsilane | 0.3 | 0.1 | | 0.2 | |
| | | | triacetoxy ethylsilane | | 0.1 | | | |
| | | | methyl tris[[(1-methylpropylidene)amino]oxy]silane | 0.2 | 0.1 | | | |
| | | | tetra-n-propylsilicate | | 0.1 | | | 0.4 |
| | | | 3-glycidoxypropyltriethoxysilane | | | 0.1 | | |
| | | | 3-methacryloxypropyltrimethoxysilane | | | | | 0.1 |
| | | | 3-mercaptopropyltrimethoxysilane | | | 0.1 | | |
| bleeding oil (C) | | | graft copolymer | 1 | | | 1 | |
| | | | methylphenyl silicone oil | 2 | 2 | 2 | 2 | 2 |
| organic solvent | | | dipropylene glycol | | 0.5 | | | |
| | | | diethylene glycol monobutyl ether | 1.2 | 0.5 | 1 | | 0.9 |
| | | | n-butanol | | | | 0.6 | |
| | | | xylene | 2.5 | 3.6 | 3.5 | 4 | 4.2 |
| total of component b | | | | 12 | 12 | 12 | 12 | 12 |

**[Table 7]**

| Table 7 | | | | production example of component b | | | | |
|---|---|---|---|---|---|---|---|---|
| | | | | 11 | 12 | 13 | 14 | 15 |
| name of component b | | | | b11 | b12 | b13 | b14 | b15 |
| curing agent (B) | B1 | B1a | propan-1-amine | | | | 0.3 | |
| | | | 1-amino-2-ethylhexane | | | | 1.2 | 0.5 |
| | | | N-2-aminoethyl-3-aminopropylmethyldimethoxysilane | 1.5 | | | | |
| | | | N-2-(aminoethyl)-8-aminooctyltrimethoxysilane | | 1.5 | | | |
| | | | N-phenyl-3-aminopropyltrimethoxysilane | | | | 0.1 | |
| | | | diethylaminomethyltriethoxysilane | | | 0.3 | | |
| | | | N,N,N',N'-tetra methyl-N"-[3-(trimethoxysilyl)propyl]guanidine | | | | | 0.1 |
| | | B1b | 2-ethylhexanoic acid | | 0.4 | 0.2 | 2.2 | 0.1 |
| | | | neodecanoic acid | 1.4 | 0.8 | 0.1 | | 0.7 |
| | | | naphthenic acid | | | 0.1 | | 0.1 |
| | | | oleic acid | | | 0.1 | | 0.1 |
| | | | rosin acid | | | 0.1 | | 0.1 |
| | | | 4-methylhexahydrophthalic anhydride/hexahydrophthalic anhydride | | | 0.1 | | 0.1 |
| | B2 | B2 | 3-triethoxysilyl-N-(1,3-dimethylbutyridene) propyla mine | | | | | 0.1 |
| crosslinker | | | partially hydrolyzed polycondensation products of tetra ethoxy silane | 2.1 | 2.3 | 2.5 | 2 | 2.3 |
| | | | tris (isopropenyloxy)vinylsilane | 0.1 | | | | |
| | | | triacetoxy ethylsilane | 0.1 | | | | 0.1 |
| | | | methyl tris[[(1-methylpropylidene)amino]oxy]silane | 0.1 | 0.1 | | 0.5 | |
| | | | tetra-n-propylsilicate | 0.1 | | | | |
| | | | 3-glycidoxypropyltriethoxysilane | | | | | 0.1 |
| | | | 3-mercaptopropyltrimethoxysilane | | 0.1 | | | |
| bleeding oil (C) | | | graft copolymer | | | 1 | | |
| | | | methylphenyl silicone oil | 2 | 2 | 2 | 2 | 2 |
| organic solvent | | | dipropylene glycol | 0.5 | 0.8 | 1 | | |
| | | | diethylene glycol monobutyl ether | 0.5 | | | 1 | 1 |
| | | | n-butanol | | | 0.5 | | 0.5 |
| | | | xylene | 3.6 | 4 | 4 | 2.7 | 4.1 |
| total of component b | | | | 12 | 12 | 12 | 12 | 12 |

**[Table 8]**

| Table 8 | | | | production example of component b | | | | |
|---|---|---|---|---|---|---|---|---|
| | | | | 16 | 17 | 18 | 19 | 20 |
| name of component b | | | | b16 | b17 | b18 | b19 | b20 |
| curing agent (B) | B1 | B1a | 1-amino-2-ethylhexane | 0.8 | 0.3 | | | |
| | | | N,N-dimethyl-n-octylamine | | | 1.5 | | |
| | | | N,N,N',N'-tetramethyl-1,6-hexanediamine | | | | 1.5 | |
| | | | 1,8-diazabicyclo[5.4.0]-7-undecene | | | | | 0.8 |
| | | | 3-(trimethoxysilyl)propylamine | | 0.2 | | | |
| | | | 3-(triethoxysilyl)propyla mine | 0.1 | | | | |
| | | | aminosilane-containing silane oligomer | | 0.1 | | 0.2 | |
| | | | N-phenyl-3-aminopropyltrimethoxysilane | 0.1 | | 0.1 | | 0.2 |
| | | | N, N, N -tris(3-trimethoxysilylpropyl) isocyanurate | 0.1 | | | 0.1 | |
| | | B1b | 2-ethylhexanoic acid | 0.7 | | | | 0.9 |
| | | | neodecanoic acid | 0.1 | 0.8 | 1.7 | 1.6 | |
| | | | naphthenic acid | | | | | 0.1 |
| | | | oleic acid | 0.1 | | | | |
| | | | 4-methylhexahydrophthalic anhydride/hexahydrophthalic anhydride | | | | 0.1 | |
| crosslinker | | | partially hydrolyzed polycondensation products of tetra ethoxy silane | 2.5 | 2.3 | 2.3 | 2.3 | 2.3 |
| | | | tris (isopropenyloxy)vinylsilane | | 0.2 | 0.1 | | |
| | | | triacetoxy ethylsilane | | | 0.1 | | |
| | | | methyl tris[[(1-methylpropylidene)amino]oxy]silane | | | | 0.1 | 0.1 |
| | | | tetra-n-propylsilicate | | | | | 0.1 |
| | | | 3-glycidoxypropyltriethoxysilane | | 0.1 | | | |
| | | | 3-methacryloxypropyltrimethoxysilane | | | | 0.1 | |
| bleeding oil (C) | | | graft copolymer | 1 | | | 1 | |
| | | | methylphenyl silicone oil | 2 | 2 | 2 | 2 | 2 |
| organic solvent | | | dipropylene glycol | | 1 | 1 | | |
| | | | diethylene glycol monobutyl ether | 1.5 | 1 | | | 1.8 |
| | | | n-butanol | | | | 0.4 | |
| | | | xylene | 3 | 4 | 3.2 | 2.6 | 3.7 |
| total of component b | | | | 12 | 12 | 12 | 12 | 12 |

**[Table 9]**

| Table 9 | | | | production example of component b | | | | |
|---|---|---|---|---|---|---|---|---|
| | | | | 21 | 22 | 23 | 24 | 25 |
| name of component b | | | | b21 | b22 | b23 | b24 | b25 |
| curing agent (B) | B1 | B1 | salt (B11) | | | | | 1 |
| | | B1a | N,N,N',N'-tetramethyl-1,6-hexanediamine | | 0.3 | | | |
| | | | N-phenyl-3-aminopropyltrimethoxysilane | | | | | 0.2 |
| | | B1b | 2-ethylhexanoic acid | | | | | 0.2 |
| | | | neodecanoic acid | | 1 | | | |
| | | | oleic acid | | | | | 0.1 |
| | B2 | B2 | 3-triethoxysilyl-N-(1,3-dimethylbutyridene)propylamine | 1.5 | 0.6 | | | |
| | B3 | B3a | N,N,N',N",N"-pentamethyldiethylenetriamine | | | | 1.5 | |
| | | | N,N,N',N'-tetramethyl-1,6-hexanediamine | | | 1.5 | | |
| | | B3b | acetylacetone | | | 3 | 3 | |
| crosslinker | | | partially hydrolyzed polycondensation products of tetra ethoxy silane | 2.1 | 2.1 | 2.1 | 2.1 | 2.5 |
| | | | tris (isopropenyloxy)vinylsilane | 0.1 | 0.1 | 0.1 | 0.1 | |
| | | | triacetoxy ethylsilane | 0.1 | 0.1 | 0.1 | 0.1 | |
| | | | methyl tris[[(1-methylpropylidene)amino]oxy]silane | 0.1 | 0.1 | 0.1 | 0.1 | 0.1 |
| | | | tetra-n-propylsilicate | 0.1 | 0.1 | 0.1 | 0.1 | |
| | | | 3-glycidoxypropyltriethoxysilane | | | 0.5 | 0.5 | |
| bleeding oil (C) | | | graft copolymer | | | | | 1 |
| | | | methylphenyl silicone oil | 2 | 2 | 2 | 2 | 2 |
| dehydrating | | agent | vinyl trimethoxy silane | | | | | 0.5 |
| organic solvent | | | dipropylene glycol | 0.5 | 0.5 | | | 1 |
| | | | diethylene glycol monobutyl ether | 0.5 | 0.5 | 0.5 | 0.5 | 1 |
| | | | xylene | 5 | 4.6 | 2 | 2 | 2.4 |
| total of component b | | | | 12 | 12 | 12 | 12 | 11 |

**[Table 10]**

| Table 10 | | | | production example of component b | | | | |
|---|---|---|---|---|---|---|---|---|
| | | | | 26 | 27 | 28 | 29 | 30 |
| name of component b | | | | b26 | b27 | b28 | b29 | b30 |
| curing agent (B) | B1 | B1 | salt (B12) | 1 | | | | |
| | | | salt (B13) | | 1 | | | |
| | | | salt (B14) | | | 1.5 | | |
| | | | salt (B15) | | | | 1.5 | |
| | | | salt (B16) | | | | | 2.5 |
| | | B1a | N, N, N -tris(3-trimethoxysilylpropyl) isocyanurate | 0.2 | | | | |
| | | | N,N,N',N'-tetramethyl-N"-[3-(trimethoxysilyl)propyl]guanidine | | 0.1 | | | |
| | | B1b | oleic acid | | 0.2 | | | |
| | | | rosin acid | 0.1 | | | | |
| crosslinker | | | partially hydrolyzed polycondensation products of tetra ethoxy silane | 2 | 2.5 | 2.5 | 2 | 2.5 |
| | | | tris (isopropenyloxy)vinylsilane | | 0.5 | | | 0.5 |
| | | | triacetoxy ethylsilane | 0.5 | | 0.5 | 0.5 | |
| | | | tetra-n-propylsilicate | | | | 0.5 | |
| | | | 3-glycidoxypropyltriethoxysilane | 0.3 | | | | 0.5 |
| | | | 3-methacryloxypropyltrimethoxysilane | 0.2 | | | | |
| | | | 3-mercaptopropyltrimethoxysilane | | 0.2 | | | |
| bleeding oil (C) | | | graft copolymer | 1 | | 1 | | 1 |
| | | | methylphenyl silicone oil | 2 | 2 | 2 | 2 | 2 |
| dehydrating agent | | | triethyl orthoformate | | | | 0.5 | |
| | | | zeolite | | | | 0.5 | |
| | | | calcium sulfate anhydrite | | | | 0.5 | |
| organic solvent | | | dipropylene glycol | 1 | | | 1 | |
| | | | diethylene glycol monobutyl ether | | 1 | | | |
| | | | n-butanol | 1 | | 1 | | 1 |
| | | | xylene | 2.7 | 4.5 | 3.5 | 3 | 2 |
| total of component b | | | | 11 | 11 | 10.5 | 10.5 | 9.5 |

**[Table 11]**

| Table 11 | | | | production example of component b | | | | |
|---|---|---|---|---|---|---|---|---|
| | | | | 31 | 32 | 33 | 34 | 35 |
| name of component b | | | | b31 | b32 | b33 | b34 | b35 |
| curing agent (B) | B1 | B1 | salt (B16) | | | | 1.5 | |
| | | | salt (B17) | 1 | | | | |
| | | B1a | 1-amino-2-ethylhexane | | 0.2 | 2 | | |
| | | | pentamethyleneimine | | | 0.5 | | |
| | | | N,N-dimethyl-n-octylamine | | 0.2 | | 0.3 | |
| | | | 1,8-diazabicyclo[5.4.0]-7-undecene | | 0.2 | | | |
| | | | 3-(trimethoxysilyl)propylamine | | 0.2 | 2.4 | | |
| | | | 3-(triethoxysilyl)propyla mine | | | 0.4 | | |
| | | | N-2-aminoethyl-3-aminopropylmethyldimethoxysilane | | 0.2 | | | |
| | | | N-2-aminoethyl-3-aminopropyltrimethoxysilane | | 0.2 | | | |
| | | | N-2-(aminoethyl)-8-aminooctyltrimethoxysilane | | 0.2 | | | |
| | | | N, N, N -tris(3-trimethoxysilylpropyl) isocyanurate | | | 0.2 | | |
| | | | diethylaminomethyltriethoxysilane | | 0.2 | | | |
| | | | N,N,N',N'-tetramethyl-N"-[3-(trimethoxysilyl)propyl]guanidine | | 0.2 | | | |
| | | B1b | 2-ethylhexanoic acid | | 0.3 | | | |
| | | | neodecanoic acid | 0.2 | 0.4 | 0.2 | 0.4 | |
| | | | naphthenic acid | | 0.2 | | | |
| | | | oleic acid | | 0.3 | | | |
| | | | rosin acid | | 0.2 | | | |
| | | | 4-methylhexahydrophthalic anhydride/hexahydrophthalic anhydride | | 0.2 | | | |
| | B2 | B2 | 3-triethoxysilyl-N-(1,3-dimethylbutyridene)propylamine | 0.2 | 0.2 | | | 1.5 |
| crosslinker | | | partially hydrolyzed polycondensation products of tetra ethoxy silane | 2 | 2 | 2 | 2 | 2.5 |
| | | | tris (isopropenyloxy)vinylsilane | | 0.5 | | 0.5 | |
| | | | triacetoxy ethylsilane | | | | 0.5 | |
| | | | methyl tris[[(1-methylpropylidene)aminoloxylsilane | 0.5 | | | | |
| | | | 3-glycidoxypropyltriethoxysilane | | | | 0.3 | |
| | | | 3-methacryloxypropyltrimethoxysilane | | | 0.3 | | |
| bleeding oil (C) | | | graft copolymer | | 1 | | 1 | |
| | | | methylphenyl silicone oil | 2 | 2 | 2 | 2 | 2 |
| organic solvent | | | dipropylene glycol | 1 | 0.5 | | | 0.5 |
| | | | diethylene glycol monobutyl ether | 1.1 | | | 0.5 | 0.5 |
| | | | xylene | 4 | 2.3 | 1.9 | 2 | 5 |
| | | | decamethylcyclopentasiloxane | | | | 1 | |
| total of component b | | | | 11 | 11.7 | 9.9 | 10.5 | 12 |

**[Table 12]**

| Table 12 | | | | production example of component b | | | | |
|---|---|---|---|---|---|---|---|---|
| | | | | 36 | 37 | 38 | 39 | 40 |
| name of component b | | | | b36 | b37 | b38 | b39 | b40 |
| curing agent (B) | B1 | B1 | salt (B11) | | | | 1 | |
| | | | salt (B12) | | | | 0.5 | |
| | | | salt (B13) | | 1 | | | |
| | | | salt (B14) | 0.8 | | | | |
| | | | salt (B15) | | | 1.5 | | |
| | | B1a | propan-1-amine | 0.2 | | | | |
| | | | 1-amino-2-ethylhexane | 0.2 | 0.2 | | | |
| | | | 1,8-diazabicyclo[5.4.0]-7-undecene | | | 0.2 | | |
| | | | 3-(trimethoxysilyl)propylamine | | 0.3 | | | |
| | | | 3-(triethoxysilyl)propyla mine | | | | 0.2 | |
| | | | N-2-aminoethyl-3-aminopropylmethyldimethoxysilane | 0.1 | | | | |
| | | | N, N, N -tris(3-trimethoxysilylpropyl) isocyanurate | | 0.1 | | 0.2 | |
| | | | diethylaminomethyltriethoxysilane | 0.1 | | | 0.1 | |
| | | | N,N,N',N'-tetramethyl-N"-[3-(trimethoxysilyl)propyl]guanidine | | | | 0.1 | |
| | | B1b | 2-ethylhexanoic acid | 0.5 | | 0.2 | | |
| | | | neodecanoic acid | | | | 0.5 | |
| | | | naphthenic acid | | 0.5 | | | |
| | | | oleic acid | 1 | | | | |
| | | | rosin acid | 0.2 | | | | |
| | | | 4-methylhexahydrophthalic anhydride/hexahydrophthalic anhydride | | | | 0.1 | |
| | B3 | B3a | N, N, N', N", N" -penta methyldiethylenetria mine | | | | | 0.5 |
| | | | N,N,N',N'-tetramethyl-1,6-hexanediamine | | | | | 1 |
| | | B3b | acetylacetone | | | | | 3 |
| crosslinker | | | partially hydrolyzed polycondensation products of tetra ethoxy silane | 2.5 | 2.5 | 2.5 | 2.3 | 2 |
| | | | methyl tris[[(1-methylpropylidene)amino]oxy]silane | | 0.2 | | | |
| | | | tetra-n-propylsilicate | | | | 0.2 | |
| | | | 3-glycidoxypropyltriethoxysilane | | | | | 1 |
| | | | 3-methacryloxypropyltrimethoxysilane | | | | | 1 |
| bleeding oil (C) | | | graft copolymer | | 1 | | 1 | |
| | | | methylphenyl silicone oil | 2 | 2 | 2 | 2 | 2 |
| dehydrating agent | | | triethyl orthoformate | | | | | 0.5 |
| organic solvent | | | dipropylene glycol | 1 | 1 | 1 | | |
| | | | diethylene glycol monobutyl ether | 1 | 1 | 1 | 1 | |
| | | | n-butanol | | | | 0.5 | |
| | | | xylene | 2.4 | 1.5 | 3.6 | 2.2 | 1 |
| | | | white spirit | | 0.7 | | | |
| total of component b | | | | 10.8 | 10.8 | 10.5 | 10.41 | 12 |

**[Table 13]**

| Table 13 | | | | production example of component b | | | | | |
|---|---|---|---|---|---|---|---|---|---|
| | | | | 41 | 42 | 43 | 44 | 45 | 46 |
| name of component b | | | | b41 | b42 | b43 | b44 | b45 | b46 |
| curing agent (B) | B1 | B1a | 1-amino-2-ethylhexane | | | 0.3 | | 0.2 | |
| | | | penta methylene imine | | 0.2 | | | | |
| | | | N,N-dimethyl-n-octylamine | 0.2 | | | | 0.2 | |
| | | | 1,4-diazabicyclo[2.2.2]octane | 0.2 | 0.2 | | | | |
| | | | 1,8-diazabicyclo[5.4.0]-7-undecene | | | | | 0.2 | |
| | | | 3-(trimethoxysilyl)propylamine | 0.6 | | 0.3 | | 0.2 | |
| | | | N-2-aminoethyl-3-aminopropylmethyldimethoxysilane | | | | | 0.2 | |
| | | | N-2-aminoethyl-3-aminopropyltrimethoxysilane | | 0.6 | | | 0.2 | |
| | | | N-2-(aminoethyl)-8-aminooctyltrimethoxysilane | | | | | 0.2 | |
| | | | diethylaminomethyltriethoxysilane | | | | | 0.2 | |
| | | | N,N,N',N'-tetramethyl-N"-[3-(trimethoxysilyl)propyl]guanidine | | | | | 0.2 | |
| | | B1b | 2-ethylhexanoic acid | | | | | 0.3 | |
| | | | neodecanoic acid | 1.3 | 0.5 | 0.8 | | 0.4 | |
| | | | naphthenic acid | 0.3 | | | | 0.2 | |
| | | | oleic acid | | | | | 0.3 | |
| | | | rosin acid | | 1.4 | | | 0.2 | |
| | | | 4-methylhexa hydrophtha lic anhydride/hexahydrophthalic anhydride | | | | | 0.2 | |
| | B2 | B2 | 3-triethoxysilyl-N-(1,3-dimethylbutyridene)propylamine | | | | 1.5 | 0.2 | |
| | B3 | B3a | N,N,N',N",N"-pentamethyldiethylenetriamine | | | | | | 0.5 |
| | | | N,N,N',N'-tetramethyl-1,6-hexanediamine | | | | | | 1 |
| | | B3b | acetylacetone | | | | | | 3 |
| crosslinker | | | partially hydrolyzed polycondensation products of tetra ethoxy silane | 2 | 2 | 2.5 | 2 | 2.5 | 2 |
| | | | tris (isopropenyloxy)vinylsilane | | | 0.5 | | 0.5 | |
| | | | triacetoxy ethylsilane | | | | 0.5 | | |
| | | | methyl tris[[(1-methylpropylidene)amino]oxy]silane | 0.5 | | | | | |
| | | | tetra-n-propylsilicate | | | | | | 0.5 |
| | | | 3-glycidoxypropyltriethoxysilane | | 0.3 | 0.1 | | | 1 |
| | | | 3-methacryloxypropyltrimethoxysilane | | 0.2 | 0.1 | | | 1 |
| | | | 3-mercaptopropyltrimethoxysilane | | | 0.1 | | | |
| dehydrating agent | | | vinyl trimethoxy silane | 2 | 1 | 2 | 1 | 2 | 1 |
| | | | triethyl orthoformate | 0.9 | 2 | 0.5 | 2 | | 2 |
| | | | zeolite | | 1 | 1 | | 0.5 | |
| | | | calcium sulfate anhydrite | 1 | | | | 0.5 | 1 |
| organic solvent | | | dipropylene glycol | 1 | | 1 | 1 | | 1 |
| | | | diethylene glycol monobutyl ether | 1 | 1 | | | 1 | |
| | | | n-butanol | | | 1 | | | |
| | | | xylene | 12 | 11.6 | 11.8 | 6.9 | 6 | 9 |
| | | | low boiling point aromatic naphtha | | 1 | 1 | | 3.3 | 5 |
| | | | white spirit | 1 | | | | | |
| | | | paraffin saltd hydrocarbon | | 1 | | | | |
| | | | decamethylcyclopentasiloxane | | | 1 | | | |
| total of component b | | | | 24 | 24 | 24 | 14.9 | 19.91 | 28 |

**[Table 14]**

| Table 14 | | | | comparative production example of component b | | | | |
|---|---|---|---|---|---|---|---|---|
| | | | | 1 | 2 | 3 | 4 | 5 |
| name of component b | | | | b47 | b48 | b49 | b50 | b51 |
| curing agent (B) | B1 | B1a | propan-1-amine | | | 0.2 | | |
| | | | N,N,N',N'-tetramethyl-1,6-hexanediamine | | | 0.2 | | |
| | | | N-2-aminoethyl-3-aminopropylmethyldimethoxysilane | | | 0.6 | | |
| | | | N-2-aminoethyl-3-aminopropyltrimethoxysilane | | | | 1.5 | |
| | | B1b | 2-ethylhexanoic acid | 1.3 | 0.3 | | | |
| | | | neodecanoic acid | | 0.3 | | | |
| | | | naphthenic acid | | 0.3 | | | |
| | | | oleic acid | | 0.3 | | | |
| | | | rosin acid | | 0.3 | | | |
| | | | 4-methylhexahydrophthalic anhydride/hexahydrophthalic anhydride | | 0.3 | | | |
| | B3 | B3a | N,N,N',N",N"-pentamethyldiethylenetriamine | | | | | 1.5 |
| metal curing catalyst | | | dibutyltin dilaurate | 0.5 | | | | |
| crosslinker | | | partially hydrolyzed polycondensation products of tetra ethoxy silane | 2.1 | 2.1 | 2.1 | 2.1 | 2.1 |
| | | | tris (isopropenyloxy)vinylsilane | 0.1 | 0.1 | 0.1 | 0.1 | 0.1 |
| | | | triacetoxy ethylsilane | 0.1 | 0.1 | 0.1 | 0.1 | 0.1 |
| | | | methyl tris[[(1-methylpropylidene)amino]oxy]silane | 0.1 | 0.1 | 0.1 | 0.1 | 0.1 |
| | | | tetra-n-propylsilicate | 0.1 | 0.1 | 0.1 | 0.1 | 0.1 |
| | | | 3-glycidoxypropyltriethoxysilane | | | | | 0.5 |
| bleeding oil (C) | | | methylphenyl silicone oil | 2 | 2 | 2 | 2 | 2 |
| organic solvent | | | dipropylene glycol | 0.5 | 0.5 | 0.5 | 0.5 | |
| | | | diethylene glycol monobutyl ether | 0.5 | 0.5 | 0.5 | 0.5 | 0.5 |
| | | | xylene | 4.7 | 4.7 | 5.5 | 5 | 5 |
| total of component b | | | | 12 | 12 | 12 | 12 | 12 |

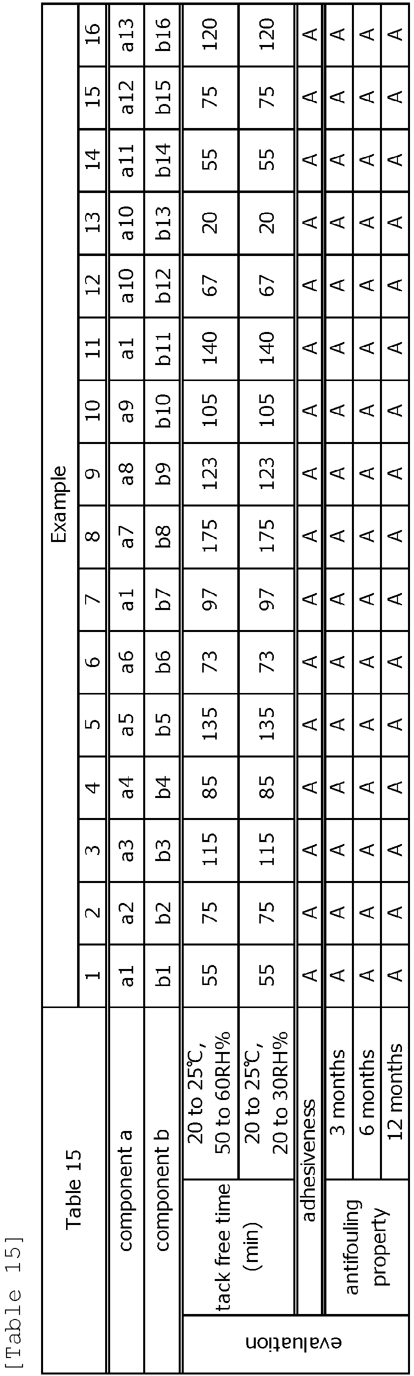

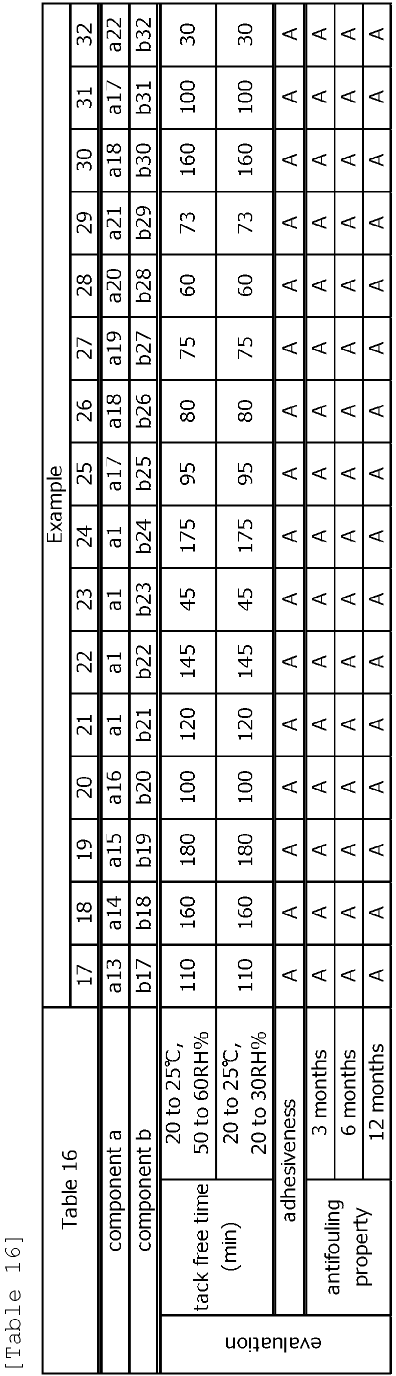

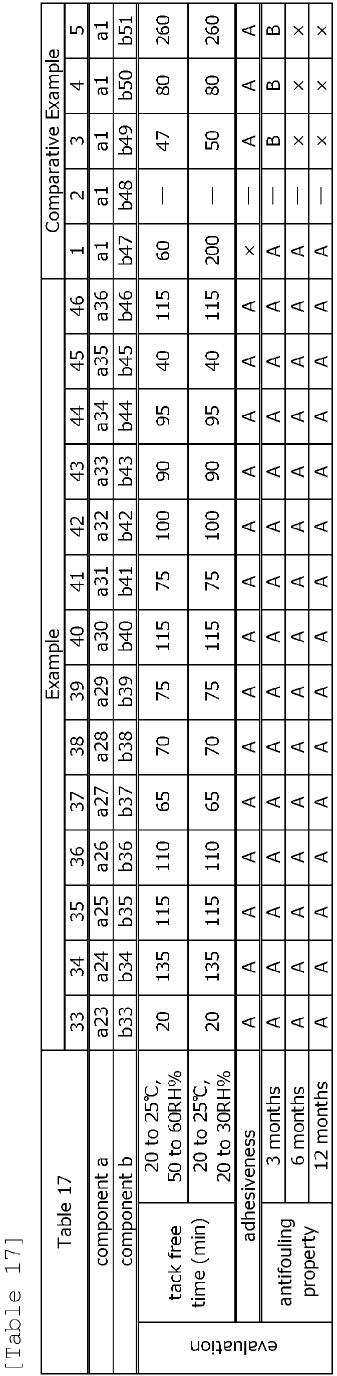

The details of the components in the Tables are as follows.

### <Organopolysiloxane (A)>

DMS-S42: product name "DMS-S42", available from Gelest, Inc., polydimethylsiloxane having silanol group at both terminals, Mw 77000
DMS-S35: product name "DMS-S35", available from Gelest, Inc., polydimethylsiloxane having silanol group at both terminals, Mw 49000
DMS-S33: product name "DMS-S33", available from Gelest, Inc., polydimethylsiloxane having silanol group at both terminals, Mw 43500
DMS-S32: product name "DMS-S32", available from Gelest, Inc., polydimethylsiloxane having silanol group at both terminals, Mw 36000
DMS-S31: product name "DMS-S31", available from Gelest, Inc., polydimethylsiloxane having silanol group at both terminals, Mw 26000
DMS-S27: product name "DMS-S27", available from Gelest, Inc., polydimethylsiloxane having silanol group at both terminals, Mw 18000
DMS-S21: product name "DMS-S21", available from Gelest, Inc., polydimethylsiloxane having silanol group at both terminals, Mw 4200
DMS-S12: product name "DMS-S12", available from Gelest, Inc., polydimethylsiloxane having silanol group at both terminals, Mw 400 to 700, 16-32cSt
YR3204: product name "YR3204", available from Momentive Performance Material, Inc., polymethylphenylsiloxane having silanol group at both terminals, (90% solution)

### <Bleeding Oil (C)>

polyglycoside • alkyl modified silicone oil: product name "BELISIL WO 5000" polydimethylsiloxane diluted product of polysiloxane modified with alkyl group and polyglycoside group (sucurose) at the terminals (available from Wacker Chemie AG)
polyglycerin modified silicone oil: product name "KF-6106"
graft copolymer: product name "KP-578" (available from Shin-Etsu Chemical Co., Ltd.) graft copolymer including acrylic polymer and dimethylpolysiloxane
methylphenyl silicone oil: product name "KF-50" (available from Shin-Etsu Chemical Co., Ltd.)
polyether modified silicone oil: product name "KF-6020" polysiloxane modified with polyethylene oxide and polypropylene oxide at the terminals (available from Shin-Etsu Chemical Co., Ltd.)
silicone oil having both terminals modified with polyether: product name "KF-6123" polysiloxane modified with polyethylene oxide and polypropylene oxide at both terminals (available from Shin-Etsu Chemical Co., Ltd.)
polyether·long alkyl·aralkyl modified silicone oil: product name "X-22-2516" polysiloxane modified with polyethylene oxide, polypropylene oxide, long alkyl, and aralkyl at the terminals (available from Shin-Etsu Chemical Co., Ltd.)
polyoxyethylene (30) lanolin: product name "NIKKOL TW-30" (all available from Nikko Chemicals Co., Ltd.)
perfluorinated polyether oil: product name "Fluorolink E10-H" (available from Solvay SA)
polyoxyethylene (10) castor oil: available from FUJIFILM Wako Pure Chemical Corporation
perfluorinated polyether oil: product name Fluorolink E10-H" (available from Solvay SA)

### <Other Coating Film Forming Component>

polyester modified silicone: product name "XR32-A1612" (available from Momentive Performance Material, Inc.), 60% solution
silicone modified acryl resin: product name "TSR171" (available from Momentive Performance Material, Inc.), 50% solution silicone modified epoxy resin: product name "TSR194" (available from Momentive Performance Material, Inc.), 50% solution
bisphenol A epoxy resin: product name "EpiCoat 828" (available from Mitsubishi Chemical Corporation)
polyester polyol: product name "NIPPOLAN 141" (available from Tosoh Corporation)
chlorinated polyolefin: product name "814HS" (available from Nippon Paper Industries Co., Ltd.) chlorine content 41% (60% toluene solution)
chlorinated ethylene vinyl acetate copolymer: product name "SUPERCHLON BX" (available from Nippon Paper Industries Co., Ltd.) chlorine content 18% (20% toluene solution)
coumaron resin: product name "L-5" (available from NITTO CHEMICAL CO.,LTD.)
propylene glycol: product name "propylene glycol, diol type, 2,000" (available from FUJIFILM Wako Pure Chemical Corporation)

### <Inorganic Filler>

silica: product name "AEROSIL 200" (available from Evonik Industries AG)
fumed silica 1: product name "AEROSIL R972" (available from Evonik Industries AG)
fumed silica 2: product name "VP4200" (available from Evonik Industries AG)
colloidal calcium carbonate: product name "Hakuenka CCR-B" (available from Shiraishi Kogyo Kaisha, Ltd.)
calcined kaolin 1: product name "Translink 445" (available from BASF Corporation), surface treated with amino silane
red iron oxide: red oxide: product name "BENGARA KINGYOKU A-TYPE" (available from MORISHITA BENGARA KOGYO CO., LTD)
titanium oxide: product name "FR-41" (available from FURUKAWA CO., LTD.)
calcined kaolin 2: product name "kaolin 90" (available from Toyokasei Co., Ltd.)

### <Thixotropic Agent>

polyamide wax: product name "Disparlon A603-20X" (available from Kusumoto Chemicals, Ltd.), amide thixotropic agent

### <Antifouling Agent>

copper pyrithione: product name "copper Omadine" (available from Lonza Group AG)
zinc pyrithione: product name "zinc Omadine" (available from Lonza Group AG)
cuprous oxide: product name "NC-301" (available from NISSIN CHEMCO)
copper powder: product name "STANDART Lac E 900 Copper Powder" (available from ECKART GmbH)
Tralopyril: product name "Econea" 2-(p-chlorophenyl)-3-cyano-4-bromo-5-trifluoromethyl pyrrole (available from JANSSEN PMP)
DCOIT: product name "SEA-NINE 211N" 4,5-dichloro-2-n-octyl-3-isothiazolone (available from The Dow Chemical Company), 30% solution
Medetomidine: "selektope" "(+)-4-[1-(2,3-dimethylphenyl)ethyl]-1H-imidazole (available from I-Tech AB )
cuprous thiocyanate: product name "cuprous thiocyanate (I)" (available from FUJIFILM Wako Pure Chemical Corporation)
Tolylfluanid: product name "Preventol A 5-S" N-{[dichrolo(fluoro)methyl]sulfanyl}-N',N'-dimethyl-N-p-trilsufamide (available from Lanxess AG)
Zineb: product name "Zineb" (available from Sigma-Aldrich, Inc.)
copper neodecanoate: product name "copper neodecanoate (Cu5%)" (available from Nihon Kagaku Sangyo Co., Ltd.)
Irgarol 1051: product name "Irgarol 1051" 2-tert-butylamino-4-cyclopropylamino-6-methylthio-1,3,5-triazine (available from BASF Corporation)
Diuron: product name "Diuron" (available from TOKYO CHEMICAL INDUSTRY CO., LTD.)
pyridine-triphenyl borane: product name "PK" (available from HOKKO CHEMICAL INDUSTRY CO.,LTD.)

### <Nitrogen Containing Compound (B1a)>

propan-1-amine: (available from TOKYO CHEMICAL INDUSTRY CO., LTD.)
1-amino-2-ethylhexane: product name "1-amino-2-ethylhexane" (available from HighChem Company Limited)
pentamethyleneimine: (available from TOKYO CHEMICAL INDUSTRY CO., LTD.)
N,N-dimethyl-n-octylamine: product name "FARMIN DM0898" (available from Kao Corporation)
N,N,N',N'-tetramethyl-1,6-hexanediamine: product name "B3150" (available from KOEI CHEMICAL COMPANY, LIMITED)
1,4-diazabicyclo[2.2.2]octane: (available from FUJIFILM Wako Pure Chemical Corporation)
1,8-diazabicyclo[5.4.0]-7-undecene: (available from TOKYO CHEMICAL INDUSTRY CO., LTD.)
3-(trimethoxysilyl)propylamine: product name "KBM-903" (available from Shin-Etsu Chemical Co., Ltd.)
3-(triethoxysilyl)propylamine: product name "KBE-903" (available from Shin-Etsu Chemical Co., Ltd.)
aminosilane-containing silane oligomer: product name "Dynasylan VPS SIVO 260" (available from Evonik Industries AG)
N-2-aminoethyl-3-aminopropylmethyldimethoxysilane: product name "KBM-602" (available from Shin-Etsu Chemical Co., Ltd.)
N-2-aminoethyl-3-aminopropyltrimethoxysilane: product name "GENIOSIL GF9" (available from Wacker Chemie AG)
N-2-(aminoethyl)-8-aminooctyltrimethoxysilane: KBM-5803 (available from Shin-Etsu Chemical Co., Ltd.)
N-phenyl-3-aminopropyltrimethoxysilane: KBM-573 (available from Shin-Etsu Chemical Co., Ltd.)
N,N,N-tris(3-trimethoxysilylpropyl) isocyanurate: KBM-9659 (available from Shin-Etsu Chemical Co., Ltd.)
Diethylaminomethyltriethoxysilane: product name "SID3395.4" (available from Gelest, Inc.)
N,N,N',N'-tetramethyl-N"-[3-(trimethoxysilyl) propyl] guanidine: (available from Construe Chemical Co., Ltd.)

### <Organic Acid (B1b)>

2-ethylhexanoic acid: product name "2-ethylhexanoic acid" (available from KH Neochem Co., Ltd.)
neodecanoic acid: (available from Marubeni Chemix Corporation)
naphthenic acid: (available from FUJIFILM Wako Pure Chemical Corporation)
oleic acid: : (available from TOKYO CHEMICAL INDUSTRY CO., LTD.)
rosin acid: (Chinese gum rosin WW)
4-methylhexahydrophthalic anhydride/hexahydrophthalic anhydride: product name "RIKACID MH-700" (available from New Japan Chemical Co., Ltd.), 4-methylhexahydrophthalic anhydride/hexahydrophthalic anhydride = 70/30

### <Ketimine Group Containing Compound (B2)>

3-triethoxysilyl-N-(1,3-dimethylbutyridene)propylamine: product name "KBE-9013P" (available from Shin-Etsu Chemical Co., Ltd.)

### <Tertiary Amino Group Containing Compound (B3a)>

N,N,N',N",N"-pentamethyldiethylenetriamine: (reagent, available from TOKYO CHEMICAL INDUSTRY CO., LTD.)
N,N,N',N'-tetramethyl-1,6-hexanediamine: product name "B3150" (available from KOEI CHEMICAL COMPANY, LIMITED)

### <β-Diketone (B3b)>

Acetylacetone: (reagent, available from TOKYO CHEMICAL INDUSTRY CO., LTD.)

### <Metal Curing Catalyst>

zirconium(neodecanate)₃(acetylacetonate): (available from Nitto Kasei Co., Ltd.)
di-n-butyltin dilaurate: product name "NEOSTANN U-100" (available from Nitto Kasei Co., Ltd.)

### <Crosslinker>

partially hydrolyzed polycondensation product of tetraethoxy silane: product name "TES40 WN" (available from Wacker Chemie AG)
tris (isopropenyloxy)vinylsilane: product name "LS-3975 (available from Shin-Etsu Chemical Co., Ltd.)
triacetoxy ethylsilane (available from FUJIFILM Wako Pure Chemical Corporation)
methyl tris[[(1-methylpropylidene)amino]oxy]silane: product name "MTO(MOS)" (available from Toray Industries, Inc.)
tetra-n-propylsilicate: product name "Dynasylan P" (available from Evonik Industries AG)
3-glycidoxypropyltriethoxysilane: product name "GENOSIL GF 82" (available from Wacker Chemie AG)
3-methacryloxypropyltrimethoxysilane: product name "KBM-503" (available from Shin-Etsu Chemical Co., Ltd.)
3-mercaptopropyltrimethoxysilane: product name "KBM-803" (available from Shin-Etsu Chemical Co., Ltd.)

### <Dehydrating Agent>

vinyl trimethoxy silane: (available from TOKYO CHEMICAL INDUSTRY CO., LTD.)
triethyl orthoformate: (available from TOKYO CHEMICAL INDUSTRY CO., LTD.)
zeolite: molecular sieve 4A (available from UNION SHOWA K.K.)
calcium sulfate anhydrite: product name "D-1N" (available from NORITAKE CO., LIMITED)

### <Organic Solvent>

xylene: (reagent, available from TOKYO CHEMICAL INDUSTRY CO., LTD.), contains ethyl benzene
low boiling point aromatic naphtha: product name "ShellSol A100" (available from Shell Chemicals Japan Ltd.)
white spirit: product name "T-SOL 3040" (available from ENEOS Corporation)
naphthene based hydrocarbon: EXXSOL DSP145/160 (available from Exxon Mobil Corporation)
paraffin based hydrocarbon: "ShellSol S" (available from Shell Chemicals Japan Ltd.)
decamethylcyclopentasiloxane: (available from TOKYO CHEMICAL INDUSTRY CO., LTD.)
dipropylene glycol: (reagent, available from TOKYO CHEMICAL INDUSTRY CO., LTD.)
diethylene glycol monobutyl ether (reagent, available from TOKYO CHEMICAL INDUSTRY CO., LTD.)
n-butanol (reagent, available from TOKYO CHEMICAL INDUSTRY CO., LTD.)

## Claims

1. An antifouling coating composition comprising:
an organopolysiloxane (A) having a cross-linkable functional group;
a curing catalyst (B); and
a bleeding oil (C); wherein:
the curing catalyst (B) contains at least one of components (B1) to (B3);
the component (B1) is a salt of a nitrogen containing compound (B1a) and an organic acid (B1b);
the component (B2) is a ketimine group containing compound; and
the component (B3) is a combination of a tertiary amino group containing compound (B3a) and a β-diketone (B3b).

2. The antifouling coating composition of Claim 1, further comprising an antifouling agent.
